# EUROPEAN PATENT APPLICATION

(11) **EP 4 261 753 A1**
(43) Date of publication of application: **18.10.2023**
(21) Application number: 21914046.4
(22) Date of filing: 21.12.2021
(51) Int. Cl.: G06N 10/00

(54) **SUPERCONDUCTING QUANTUM BIT CONTROL APPARATUS**

(30) Priority: 31.12.2020 CN 202011638203
(71) Applicant: Huawei Technologies Co., Ltd., Shenzhen, Guangdong 518129 (CN)
(72) Inventor: LUO, Yanxing, Shenzhen, Guangdong 518129 (CN); LI, Zhengyu, Shenzhen, Guangdong 518129 (CN)
(74) Representative: Grünecker Patent- und Rechtsanwälte PartG mbB
(86) International application number: PCT/CN2021/140132
(87) International publication number: WO 2022/143307

(57) **Abstract**

A quantum bit control apparatus is provided, and is used in the quantum computing field. The apparatus includes a first coupling means, a second coupling means, at least one signal extraction means, and a quantum chip that are located in a second temperature region. The first coupling means is configured to: receive a plurality of frequency-mixed control signals of different frequencies from a first transmission medium, and send the plurality of frequency-mixed control signals of different frequencies to the signal extraction means. The second coupling means is configured to: receive local oscillation signals from a second transmission medium, and send the local oscillation signals to the signal extraction means. The frequency-mixed control signals and the local oscillation signals are generated in a first temperature region, and a temperature of the first temperature region is higher than that of the second temperature region. The signal extraction means filters the received frequency-mixed control signals and the received local oscillation signals, and performs down-conversion on the filtered control signals and the filtered local oscillation signals to restore a control signal. The control signal is used to manipulate a quantum bit in the quantum chip. The apparatus can reduce heat transfer to a superconducting quantum chip and reduce difficulty in wiring on the superconducting quantum chip.

## Description

### TECHNICAL FIELD

This application relates to the field of quantum computing technologies, and in particular, to a superconducting quantum bit control apparatus.

### BACKGROUND

A quantum computer is a device that uses quantum logic to perform general computing. A special feature of the quantum computer is that superposition of quantum states makes large-scale "parallel" computing possible, and a special quantum algorithm can be designed accordingly, so that solutions of some problems can be accelerated exponentially. Thus, problems that a conventional computer is difficult to solve in short time are resolved, for example, prime factorization of large numbers and combinatorial optimization. With development of theoretical researches, new quantum algorithms have been constantly proposed to accelerate solutions of different problems.

Abasic unit of the quantum computer is a quantum bit, and various quantum algorithms are used to perform different quantum operations on different quantities of quantum bits. The quantum bit is equivalent to a semiconductor logic gate on the conventional computer. A large quantity of quantum bits indicates a stronger parallel acceleration capability of the quantum computer and a faster speed for solving a same problem. The quantum bit can be constructed by using a plurality of physical systems, such as a superconducting circuit, an ion trap, a semiconductor quantum dot, and topological quantum computing. The superconducting circuit is one of popular systems.

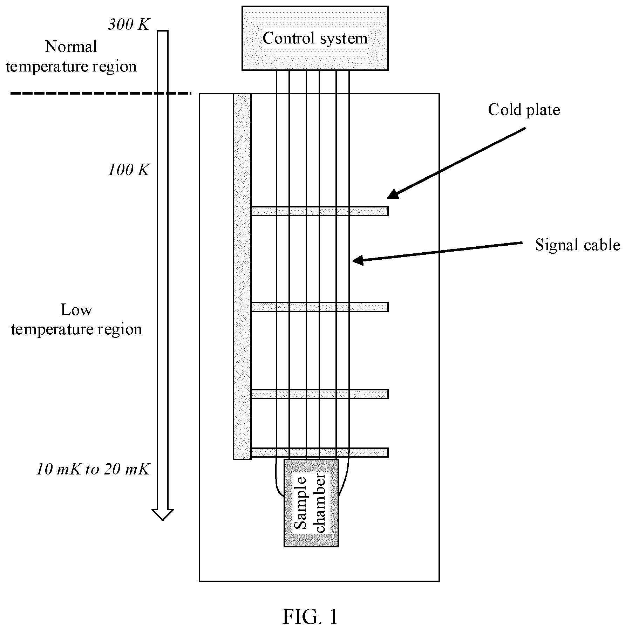

A basic unit of superconducting quantum computing is a superconducting quantum chip, and the superconducting quantum chip needs to operate in an ultra-low temperature environment (about a 10 mK level). An ultra-low temperature can effectively reduce impact of environmental noise. Therefore, a low-temperature refrigeration technology is a key technology of the superconducting quantum computing. Currently, a commonly used refrigeration device is a (liquid helium-free) dilution refrigerator. The dilution refrigerator uses a hierarchical refrigeration technology, and performs further refrigeration in an extremely low temperature region by using a helium element in phase change heat absorption, so that a lowest temperature region can be cooled to the 10 mK level. FIG. 1 shows a basic structure of a common dilution refrigerator. A cold plate in a lowest temperature region needs to reach a temperature below 20 mK, and a quantum chip is usually located in a sample chamber shown in FIG. 1.

To manipulate a quantum bit on the quantum chip, electrical signals are required to pass into the sample chamber at the bottom layer. Signal cables of these control signals pass through different cold plates layer by layer (refer to a schematic diagram of signal cables in FIG. 1), and attenuation and cooling are performed at each cold plate, to reduce heat transfer to the chip in the sample chamber. Heat conduction of the control signal cables is a maximum input heat source of the whole cold plate. However, in a current solution, each quantum bit requires at least one control signal cable, and two additional signal cables are further required if adjustable coupling is considered. Therefore, in an existing dilution refrigerator structure, a quantity of superconducting quantum bits that can be supported by the dilution refrigerator has an upper limit. When heat conduction power of a cold plate is greater than refrigeration power of the cold plate as the quantity of quantum bits increases, the quantity of quantum bits cannot increase. Therefore, reducing an actual quantity of cables or reducing heat conduction power of a single cable is a problem that a measurement and control system is about to face.

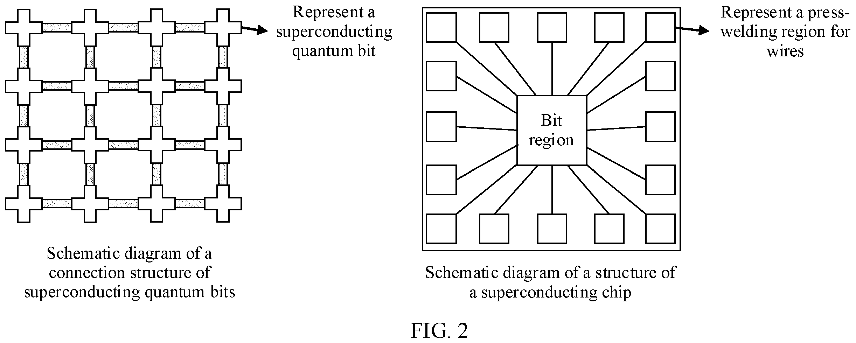

In addition, a superconducting quantum bit chip faces a wiring problem as the quantity of bits increases. Specifically, each superconducting quantum bit needs an independent control signal. Currently, in a common chip structure, each bit needs 3 to 4 control cables on average. One end of the control cable is close to a superconducting bit and the other end is connected to an edge of the chip. At the edge, the control cable is magnified into a large conductive region that serves as a pad for the chip and an external circuit bounding wire. A size of a single pad is usually at a 50 um level to a 500 um level, and the pad is disposed at the utmost edge of the chip. A connection of large-scale superconducting quantum bits is not just a single chain. Actually, currently, two-dimensional plane distribution is commonly used, for example, square lattice arrangement shown on the left of FIG. 2. Each superconducting bit is connected to four bits in four directions: up, down, left, and right. In such a two-dimensional arrangement structure, as a chip size increases, a quantity of superconducting bits that can be accommodated in a bit region increases squarely (proportionally to an area), but a quantity of press-welding regions for wires increases only linearly (proportionally to a circumference). A chip area is limited and cannot be arbitrarily large, and this limits a maximum quantity of bits that a single chip can accommodate. It can be predicted that when the quantity of bits increases greatly, there is insufficient space for a layout of the control cables in the press-welding region on the chip.

In view of the foregoing problem, the present patent proposes a new superconducting quantum bit control apparatus, to effectively reduce heat conduction power of a cable to a chip, and reduce a quantity of press-welding regions on the chip, thereby increasing a quantity of quantum bits that a single chip can accommodate, and implementing system expansion.

### SUMMARY

This application provides a quantum bit control apparatus, to resolve a prior-art problem that a quantity of quantum bits is limited due to heat conduction and insufficient space for control cables in a press-welding region.

According to a first aspect, a quantum bit control apparatus is provided. The quantum bit control apparatus includes a first coupling means, a second coupling means, at least one signal extraction means, and a quantum chip that are located in a second temperature region.

The first coupling means is configured to: receive a plurality of frequency-mixed control signals from a first transmission medium, and send the frequency-mixed control signals to the signal extraction means, where frequencies of all the frequency-mixed control signals are different.

The second coupling means is configured to: receive local oscillation signals from a second transmission medium, and send the local oscillation signals to the signal extraction means, where the frequency-mixed control signals and the local oscillation signals are generated in a first temperature region, and a temperature of the first temperature region is higher than that of the second temperature region.

The signal extraction means includes: a first filtering and receiving component, a second filtering and receiving component, and a first mixer.

The first filtering and receiving component is configured to: filter the received frequency-mixed control signals, and send filtered control signals to the first mixer.

The second filtering and receiving component is configured to: filter the received local oscillation signals, and send filtered local oscillation signals to the first mixer.

The first mixer is configured to: perform down-conversion on the filtered control signals and the filtered local oscillation signals to restore a control signal, and send the control signal to the quantum chip, where the control signal is used to manipulate a quantum bit in the quantum chip.

In this embodiment of this application, the frequency-mixed control signals are transmitted by using a frequency division multiplexing technology, and down-conversion is performed on the frequency-mixed control signals in a low temperature region, so that the obtained control signal conforms to an operating frequency of the corresponding quantum bit, thereby achieving a function of manipulating the quantum bit. According to this method, a quantity of signal transmission cables from a high temperature region to the low temperature region can be reduced, heat transfer caused by the cables can be reduced, and a wiring problem on the quantum chip can also be alleviated.

With reference to the first aspect, in a first possible implementation of the first aspect, the first coupling means is an antenna or a near-field coupling structure, and the second coupling means is an antenna or a near-field coupling structure. Transmitting the frequency-mixed control signals through the antenna can reduce the quantity of transmission cables on the chip, and solve the wiring problem more effectively. Transmitting the frequency-mixed control signals by using the near-field coupling structure generates fewer losses than the antenna.

The following uses the first coupling means and the second coupling means as examples to provide several specific structures.

With reference to the first possible implementation of the first aspect, in a second possible implementation of the first aspect, the first coupling means is a first antenna, and is configured to broadcast the received frequency-mixed control signals; and the second coupling means is a second antenna, and is configured to broadcast the received local oscillation signals.

The first filtering and receiving component includes a first receive antenna and a first filter; the first receive antenna is configured to receive the frequency-mixed control signals, and send the frequency-mixed control signals to the first filter; and the first filter is configured to filter the frequency-mixed control signals, and send filtered control signals to the first mixer.

The second filtering and receiving component includes a second receive antenna and a second filter; the second receive antenna is configured to receive the local oscillation signals, and send the local oscillation signals to the second filter; and the second filter is configured to filter the local oscillation signals, and send filtered local oscillation signals to the first mixer.

With reference to the first possible implementation of the first aspect, in a third possible implementation of the first aspect, the first coupling means is a first antenna, and is configured to broadcast the received frequency-mixed control signals; the second coupling means is a second antenna, and is configured to broadcast the received local oscillation signals; and the signal extraction means includes N first mixers, where N is an integer greater than 1.

The first filtering and receiving component includes a third receive antenna, a first power divider, and N third filters, where the third receive antenna is configured to receive the frequency-mixed control signals, and send the frequency-mixed control signals to the first power divider; the first power divider is configured to divide the frequency-mixed control signals into N channels, and respectively send the N channels of frequency-mixed control signals to the N third filters; and the third filter is configured to filter one channel of received frequency-mixed control signals, and send filtered control signals to a corresponding first mixer, where each third filter is connected to a different first mixer.

The second filtering and receiving component includes a fourth receive antenna, a second power divider, and N fourth filters, where the fourth receive antenna is configured to receive the local oscillation signals, and send the local oscillation signals to the second power divider; the second power divider is configured to divide the local oscillation signals into N channels, and respectively send the N channels of local oscillation signals to the N fourth filters; and the fourth filter is configured to filter one channel of received local oscillation signals, and send filtered local oscillation signals to the corresponding first mixer, where each fourth filter is connected to a different first mixer.

With reference to the first possible implementation of the first aspect, in a fourth possible implementation of the first aspect, the first coupling means is a first antenna, and is configured to broadcast the received frequency-mixed control signals; the second coupling means is a second antenna, and is configured to broadcast the received local oscillation signals; and the signal extraction means includes N first filtering and receiving components and N first mixers, where N is an integer greater than 1.

The first filtering and receiving component includes a first receive antenna and a first filter, where the first receive antenna is configured to receive the frequency-mixed control signals, and send the frequency-mixed control signals to the first filter; and the first filter is configured to filter the frequency-mixed control signals, and send filtered control signals to a corresponding first mixer.

The second filtering and receiving component includes a fourth receive antenna, a second power divider, and N fourth filters, where the fourth receive antenna is configured to receive the local oscillation signals, and send the local oscillation signals to the second power divider; the second power divider is configured to divide the local oscillation signals into N channels, and respectively send the N channels of local oscillation signals to the N fourth filters; and the fourth filter is configured to filter one channel of received local oscillation signals, and send filtered local oscillation signals to the corresponding first mixer, where each fourth filter is connected to a different first mixer.

With reference to the first possible implementation of the first aspect, in a fifth possible implementation of the first aspect, the first coupling means is a first antenna, and is configured to broadcast the received frequency-mixed control signals; the second coupling means is a second antenna, and is configured to broadcast the received local oscillation signals; and the signal extraction means includes N second filtering and receiving components and N first mixers, where N is an integer greater than 1.

The first filtering and receiving component includes a third receive antenna, a first power divider, and N third filters, where the third receive antenna is configured to receive the frequency-mixed control signals, and send the frequency-mixed control signals to the first power divider; the first power divider is configured to divide the frequency-mixed control signals into N channels, and respectively send the N channels of frequency-mixed control signals to the N third filters; and the third filter is configured to filter one channel of received frequency-mixed control signals, and send filtered control signals to a corresponding first mixer, where each third filter is connected to a different first mixer.

The second filtering and receiving component includes a second receive antenna and a second filter; the second receive antenna is configured to receive the local oscillation signals, and send the local oscillation signals to the second filter; and the second filter is configured to filter the local oscillation signals, and send filtered local oscillation signals to the first mixer.

With reference to the foregoing possible implementations, in a sixth possible implementation of the first aspect, the first transmission medium is a coaxial cable or a dielectric waveguide; and the second transmission medium is a coaxial cable or a dielectric waveguide, and is responsible for transmitting high-frequency signals.

With reference to the first possible implementation of the first aspect, in a seventh possible implementation of the first aspect, the first coupling means is a first near-field coupling structure or a first cable connector, and is configured to couple the frequency-mixed control signals received from the first transmission medium to the signal extraction means; and the second coupling means is a second near-field coupling structure or a second cable connector, and is configured to couple the local oscillation signals received from the second transmission medium to the signal extraction means; the first filtering and receiving component is configured to: divide the received frequency-mixed control signals into M channels, perform filtering on each channel of frequency-mixed control signals, and respectively send M filtered control signals to corresponding first mixers, where frequencies of all the filtered control signals are different, and M is an integer greater than 1; and the second filtering and receiving component is configured to: divide the received local oscillation signals into M channels, perform filtering on each channel of local oscillation signals, and send M filtered local oscillation signals to the corresponding first mixers.

With reference to the seventh possible implementation of the first aspect, in an eighth possible implementation of the first aspect, the first filtering and receiving component includes a third power divider and M fifth filters, where the third power divider is configured to divide the frequency-mixed control signals into the M channels, and respectively send the M channels of frequency-mixed control signals to the M fifth filters; and the fifth filter is configured to filter one channel of received frequency-mixed control signals, and send filtered control signals to a corresponding first mixer, where each fifth filter is connected to a different first mixer; and the second filtering and receiving component includes a fourth power divider and M sixth filters, where the fourth power divider is configured to divide the local oscillation signals into the M channels, and respectively send the M channels of local oscillation signals to the M sixth filters; and the sixth filter is configured to filter one channel of received local oscillation signals, and send filtered local oscillation signals to the corresponding first mixer, where each sixth filter is connected to a different first mixer.

With reference to the foregoing possible implementations, in a ninth possible implementation of the first aspect, there are a plurality of first coupling means, and signals output by all the first coupling means are used to control quantum bits in different regions of the quantum chip. This embodiment allows each coupling means to be responsible for a different region, which can adapt to further growth in a quantity of quantum bits in the future.

With reference to the foregoing possible implementations, in a tenth possible implementation of the first aspect, the signal extraction means further includes a signal filter, configured to: receive signals output by the first mixer, and filter out high-frequency parts of the output signals to restore the control signal. This improves accuracy of the control signals. The signal filter one-to-one corresponds to the first mixer.

With reference to the foregoing possible implementations, in an eleventh possible implementation of the first aspect, one first mixer corresponds to one quantum bit. Optionally, one quantum bit may require a plurality of control signals. In this case, the quantum bit may correspond to a plurality of first mixers.

With reference to the foregoing possible implementations, in a twelfth possible implementation of the first aspect, the signal extraction means and the quantum bit are integrated at a same layer of the quantum chip, or may be integrated at different layers of the quantum chip. When the signal extraction means and the quantum bit are integrated at different layers, a shielding structure or a shield layer exists between a layer at which the signal extraction means is located and a layer at which the quantum bit is located, to reduce impact of an interference signal on manipulation of the quantum bit.

With reference to the foregoing possible implementations, in a thirteenth possible implementation of the first aspect, the first mixer is a superconducting tunnel junction (Superconductor-Insulator-Superconductor, SIS) mixer or a phonon-cooled superconducting hot electron bolometer (Hot Electron Bolometer, HEB) mixer.

With reference to the foregoing possible implementations, in a sixteenth possible implementation of the first aspect, the quantum bit control apparatus further includes a control signal generator, a local oscillation signal generator, a second mixer, and a combiner that are located in the first temperature region; the control signal generator and the local oscillation signal generator are separately connected to the second mixer, where one control signal and one local oscillation signal form one group, there are at least two groups, and sums of frequencies of the control signals and the local oscillation signals in all groups are different from each other; the second mixer is configured to perform up-conversion on the control signals and the local oscillation signals in all the groups, to obtain the plurality of frequency-mixed control signals of different frequencies; and the combiner is configured to: receive the frequency-mixed control signals, combine the plurality of frequency-mixed control signals into one channel, and send the one channel of frequency-mixed control signals to the second coupling means through the first transmission medium, where the frequency-mixed control signals are used to manipulate the quantum bit in the quantum chip. Optionally, frequencies of the control signals in the groups are different, and/or frequencies of the local oscillation signals in the groups are different.

According to a second aspect, a quantum bit control method is provided. The method includes: receiving a plurality of frequency-mixed control signals from a first transmission medium in a second temperature region; receiving local oscillation signals from a second transmission medium in the second temperature region, where the frequency-mixed control signals and the local oscillation signals are generated in a first temperature region, and a temperature of the first temperature region is higher than that of the second temperature region; filtering the frequency-mixed control signals; filtering the local oscillation signals; and performing down-conversion on filtered control signals and filtered local oscillation signals to restore a control signal, where the control signal is used to manipulate a quantum bit in a quantum chip, there are a plurality of filtered control signals and a plurality of filtered local oscillation signals, and the plurality of filtered control signals one-to-one correspond to the plurality of filtered local oscillation signals.

In this embodiment of this application, the frequency-mixed control signals are transmitted by using a frequency division multiplexing technology, and down-conversion is performed on the frequency-mixed control signals in a low temperature region, so that the obtained control signal conforms to an operating frequency of the corresponding quantum bit, thereby achieving a function of manipulating the quantum bit. According to this method, a quantity of signal transmission cables from a high temperature region to the low temperature region can be reduced, heat transfer caused by the cables can be reduced, and a wiring problem on the quantum chip can also be alleviated.

With reference to the second aspect, in a first possible implementation of the second aspect, after the receiving a plurality of frequency-mixed control signals from a first transmission medium, the method further includes: dividing the frequency-mixed control signals into N channels, and separately filtering the N channels of frequency-mixed control signals, where N is an integer greater than 1.

With reference to the second aspect or the first possible implementation of the second aspect, in a second possible implementation of the second aspect, after the receiving local oscillation signals from a second transmission medium, the method further includes: dividing the local oscillation signals into N channels, and separately filtering the N channels of local oscillation signals, where N is an integer greater than 1.

With reference to any one of the second aspect or the possible implementations of the second aspect, in a third possible implementation of the second aspect, the first transmission medium is a coaxial cable or a dielectric waveguide; and the second transmission medium is a coaxial cable or a dielectric waveguide, and is responsible for transmitting high-frequency signals.

With reference to any one of the second aspect or the possible implementations of the second aspect, in a fourth possible implementation of the second aspect, the frequency-mixed control signals are received in a broadcast radiation or near-field coupling manner, and/or the local oscillation signals are received in the broadcast radiation or near-field coupling manner. Transmitting the frequency-mixed control signals in the broadcast radiation manner can reduce the quantity of transmission cables on the chip, and solve the wiring problem more effectively. Transmitting the frequency-mixed control signals in the near-field coupling manner generates fewer losses than the broadcast radiation manner.

With reference to any one of the second aspect or the possible implementations of the second aspect, in a fifth possible implementation of the second aspect, after the performing down-conversion on filtered control signals and filtered local oscillation signals, the method further includes: filtering down-converted signals, and filtering out high-frequency parts of signals, to restore the control signal. This reduces impact of the high-frequency signals on quantum manipulation accuracy.

With reference to any one of the second aspect or the possible implementations of the second aspect, in a sixth possible implementation of the second aspect, before the receiving the frequency-mixed control signals and the local oscillation signals, the method further includes: generating the control signals and the local oscillation signals in the first temperature region, where one control signal and one local oscillation signal form one group, there are at least two groups, and sums of frequencies of the control signals and the local oscillation signals in all groups are different from each other; performing up-conversion on the control signals and the local oscillation signals in all the groups, to obtain the plurality of frequency-mixed control signals of different frequencies; and combining the plurality of frequency-mixed control signals into one channel, and sending, through the first transmission medium, the plurality of frequency-mixed control signals to the quantum chip located in the second temperature region.

Optionally, frequencies of the control signals in the groups are different, and/or frequencies of the local oscillation signals in the groups are different.

According to a third aspect, a quantum bit control apparatus is provided. The quantum bit control apparatus further includes a first coupling means and at least one signal extraction means that are located in a second temperature region.

The first coupling means is configured to: receive a plurality of frequency-mixed control signals of different frequencies from a first transmission medium, and send the frequency-mixed control signals to the signal extraction means, where the frequency-mixed control signals are generated in a first temperature region, and a temperature of the first temperature region is higher than that of the second temperature region.

The signal extraction means includes a first filtering and receiving component, an oscillator, and a first mixer.

The first filtering and receiving component is configured to: filter the received frequency-mixed control signals, and send filtered control signals to the first mixer.

The oscillator is configured to: generate local oscillation signals corresponding to the filtered control signals, and send the local oscillation signals to the first mixer.

The first mixer is configured to: perform down-conversion on the received filtered control signals and the corresponding local oscillation signals to restore a control signal, and send the control signal to a quantum chip, where the control signal is used to manipulate a quantum bit in the quantum chip.

In this embodiment of this application, the frequency-mixed control signals are transmitted by using a frequency division multiplexing technology, and down-conversion is performed on the frequency-mixed control signals in a low temperature region, so that the obtained control signal conforms to an operating frequency of the corresponding quantum bit, thereby achieving a function of manipulating the quantum bit. According to this method, a quantity of signal transmission cables from a high temperature region to the low temperature region can be reduced, heat transfer caused by the cables can be reduced, and a wiring problem on the quantum chip can also be alleviated.

With reference to the third aspect, in a first possible implementation of the third aspect, the first coupling means is an antenna or a near-field coupling structure. Transmitting the frequency-mixed control signals through the antenna can reduce the quantity of transmission cables on the chip, and solve the wiring problem more effectively. Transmitting the frequency-mixed control signals by using the near-field coupling structure generates fewer losses than the antenna.

With reference to the first possible implementation of the third aspect, in a second possible implementation of the third aspect, the first coupling means is a first antenna, and is configured to broadcast the received frequency-mixed control signals. The first filtering and receiving component includes a first receive antenna and a first filter. The first receive antenna is configured to: receive the frequency-mixed control signals, and send the frequency-mixed control signals to the first filter. The first filter is configured to: filter the frequency-mixed control signals, and send filtered control signals to the first mixer.

With reference to the first possible implementation of the third aspect, in a third possible implementation of the third aspect, the first coupling means is a first antenna, and is configured to broadcast the received frequency-mixed control signals. The signal extraction means includes N first mixers, where N is an integer greater than 1. The first filtering and receiving component includes a third receive antenna, a first power divider, and N third filters. The third receive antenna is configured to receive the frequency-mixed control signals, and send the frequency-mixed control signals to the first power divider. The first power divider is configured to divide the frequency-mixed control signals into N channels, and respectively send the N channels of frequency-mixed control signals to the N third filters. The third filter is configured to filter one channel of received frequency-mixed control signals, and send filtered control signals to a corresponding first mixer. Each third filter is connected to a different first mixer.

With reference to the foregoing possible implementations, in a fourth possible implementation of the third aspect, there are a plurality of first coupling means, and signals output by all the first coupling means are used to control quantum bits in different regions of the quantum chip.

With reference to the foregoing possible implementations, in a fifth possible implementation of the third aspect, the signal extraction means further includes a signal filter, configured to: receive signals output by the first mixer, and filter out high-frequency parts of the output signals to restore the control signal, where the signal filter one-to-one corresponds to the first mixer.

With reference to the foregoing possible implementations, in a sixth possible implementation of the third aspect, one first mixer corresponds to one quantum bit. Optionally, one quantum bit may require a plurality of control signals. In this case, the quantum bit may correspond to a plurality of first mixers.

With reference to the foregoing possible implementations, in a seventh possible implementation of the third aspect, the signal extraction means and the quantum bit are integrated at a same layer of the quantum chip, or may be integrated at different layers of the quantum chip. When the signal extraction means and the quantum bit are integrated at different layers, a shielding structure or a shield layer exists between a layer at which the signal extraction means is located and a layer at which the quantum bit is located, to reduce impact of an interference signal on manipulation of the quantum bit.

With reference to the foregoing possible implementations, in an eighth possible implementation of the third aspect, the first mixer is an SIS mixer or an HEB mixer.

In this embodiment of this application, the frequency-mixed control signals are transmitted by using the frequency division multiplexing technology, and down-conversion is performed on the frequency-mixed control signals in the low temperature region, so that the obtained control signal conforms to the operating frequency of the corresponding quantum bit, thereby achieving the function of manipulating the quantum bit. According to this method, the quantity of signal transmission cables from the high-temperature region to the low-temperature region can be reduced, heat transfer caused by the cables can be reduced. In addition, the wiring problem on the quantum chip can further be alleviated in manners such as a manner of broadcast the signals through the antenna, to adapt to further growth in a quantity of quantum bits in the future.

### BRIEF DESCRIPTION OF DRAWINGS

FIG. 1 is a schematic diagram of a structure of a dilution refrigerator in a common case;
FIG. 2 is a schematic diagram of a structure of a quantum bit in a common case;
FIG. 3 shows a quantum bit control signal generation apparatus according to this application;
FIG. 4 shows another quantum bit control signal generation apparatus according to this application;
FIG. 5(a) is a schematic diagram of a quantum bit control apparatus according to an embodiment of this application;
FIG. 5(b)-1 and FIG. 5(b)-2 are a schematic diagram of a quantum bit control apparatus according to another embodiment of this application;
FIG. 5(c)-1 and FIG. 5(c)-2 are a schematic diagram of a quantum bit control apparatus according to another embodiment of this application;
FIG. 5(d)-1 and FIG. 5(d)-2 are a schematic diagram of a quantum bit control apparatus according to another embodiment of this application;

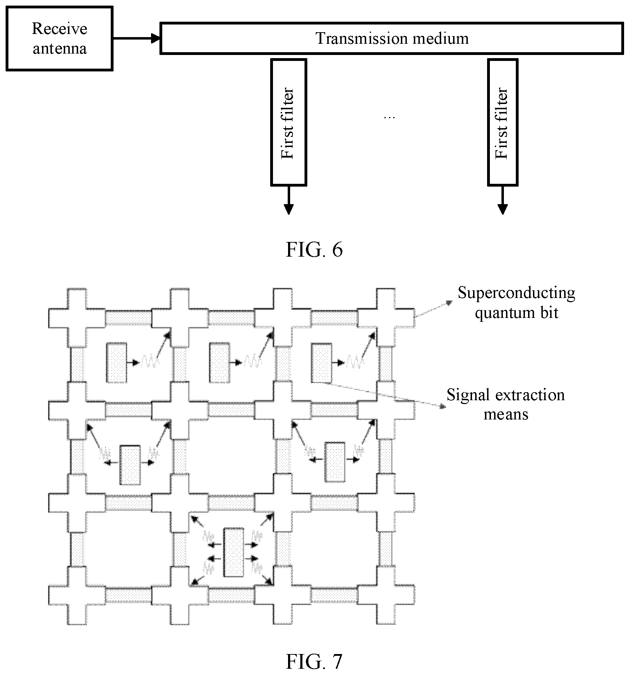

FIG. 6 is a schematic diagram of a filtering and receiving component according to an embodiment of this application;
FIG. 7 is a schematic diagram of a quantum chip plane layout according to an embodiment of this application;

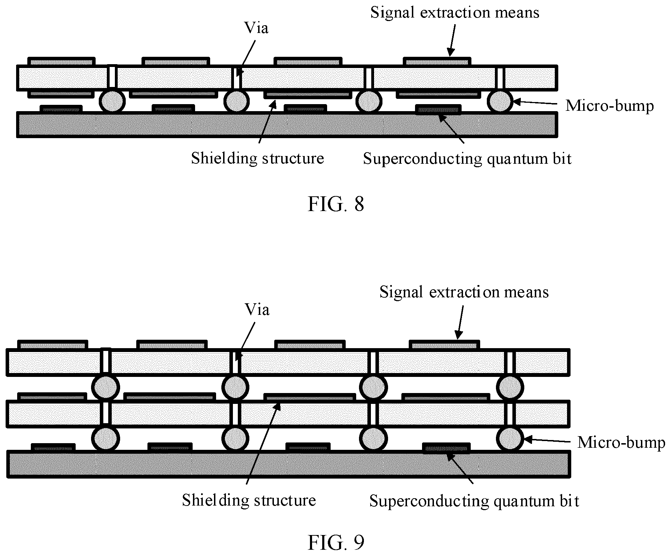

FIG. 8 is a side view of a quantum chip according to an embodiment of this application;
FIG. 9 is a side view of a quantum chip according to another embodiment of this application;

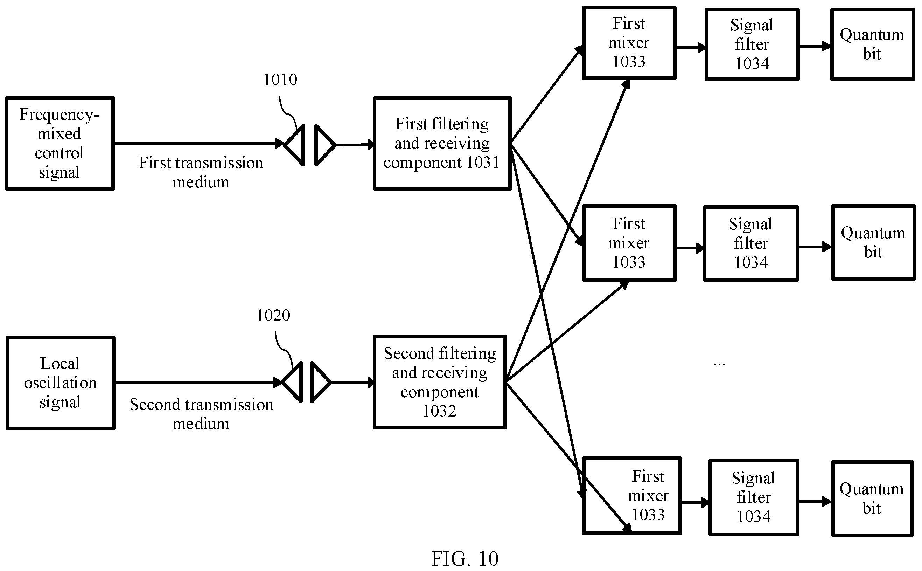

FIG. 10 is a schematic diagram of a quantum bit control apparatus according to another embodiment of this application;

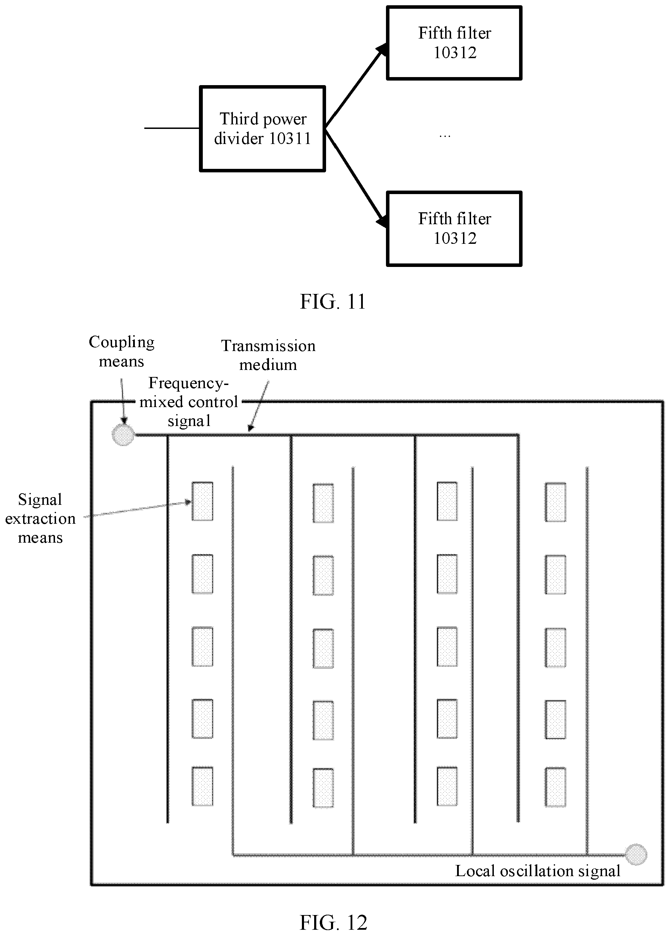

FIG. 11 is a schematic diagram of a filtering and receiving component according to another embodiment of this application;
FIG. 12 is a schematic diagram of a quantum chip plane layout according to another embodiment of this application;

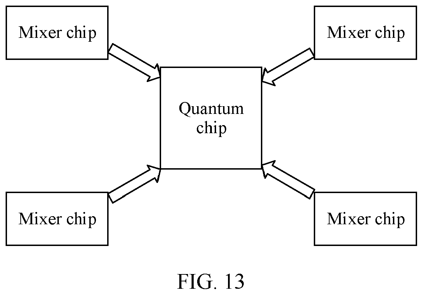

FIG. 13 is a schematic diagram of a quantum chip plane layout according to another embodiment of this application;

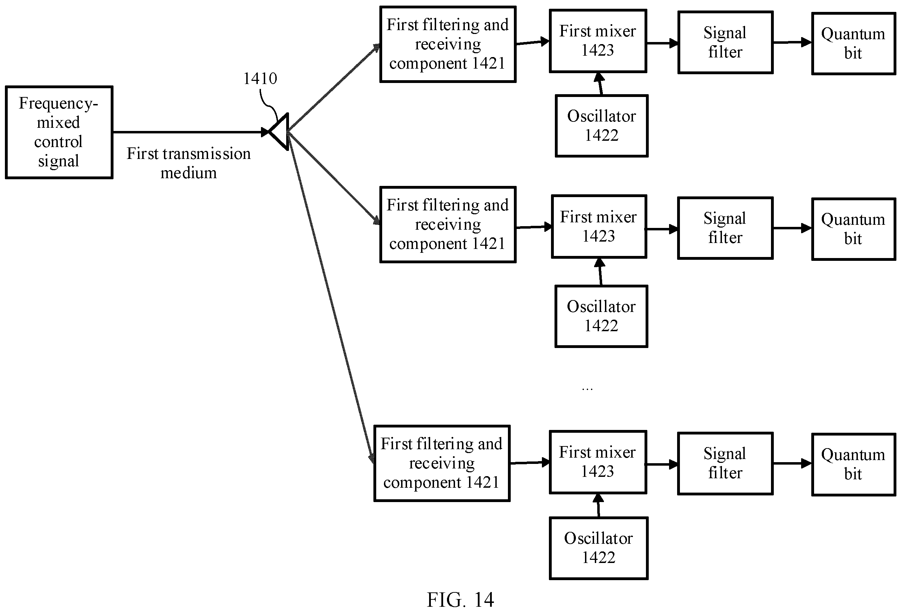

FIG. 14 is a schematic diagram of a quantum bit control apparatus according to another embodiment of this application;

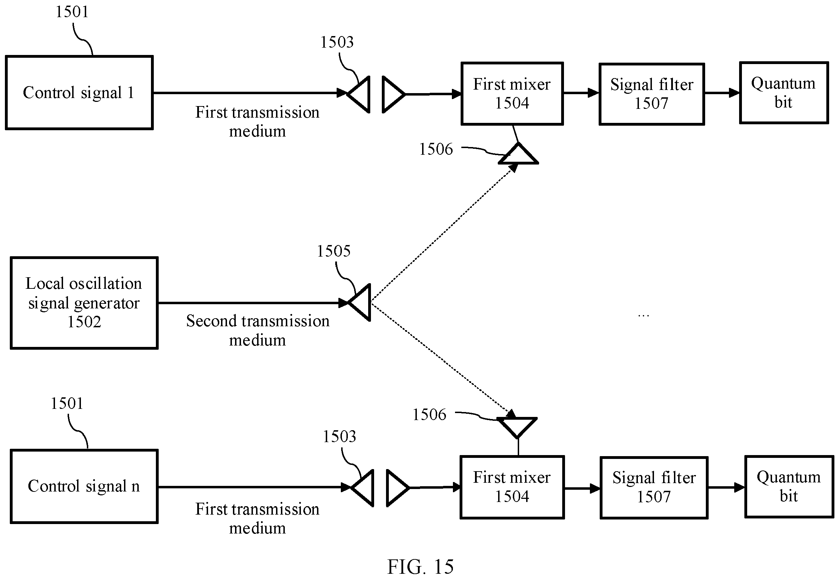

FIG. 15 is a schematic diagram of a quantum bit control apparatus according to another embodiment of this application;

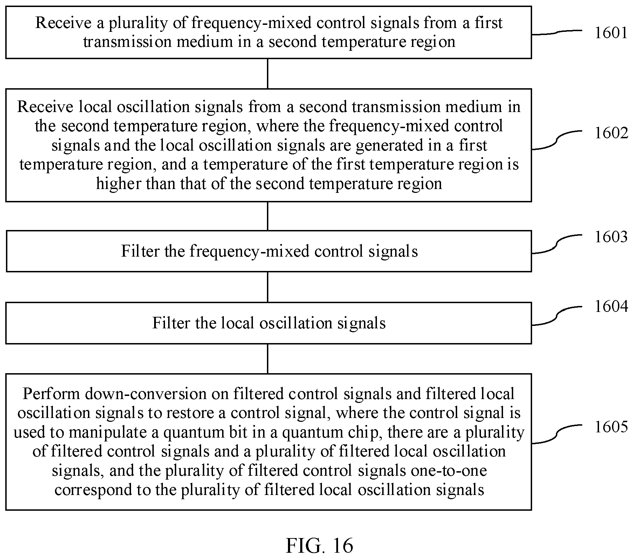

FIG. 16 is a flowchart of a quantum bit control method according to an embodiment of this application; and

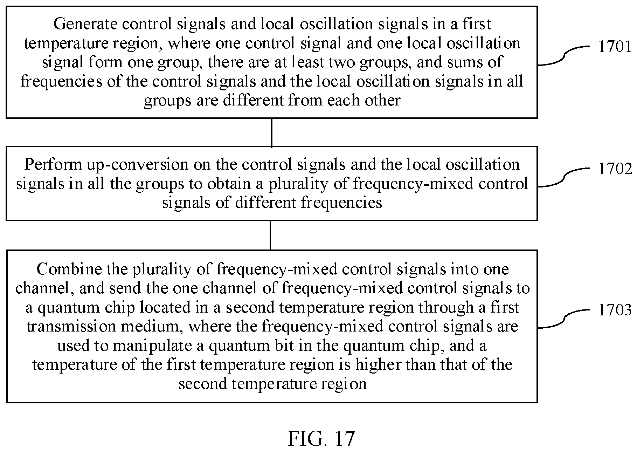

FIG. 17 is a flowchart of a quantum bit control signal generation method according to an embodiment of this application.

### DESCRIPTION OF EMBODIMENTS

The following describes technical solutions in embodiments of this application with reference to accompanying drawings in embodiments of this application.

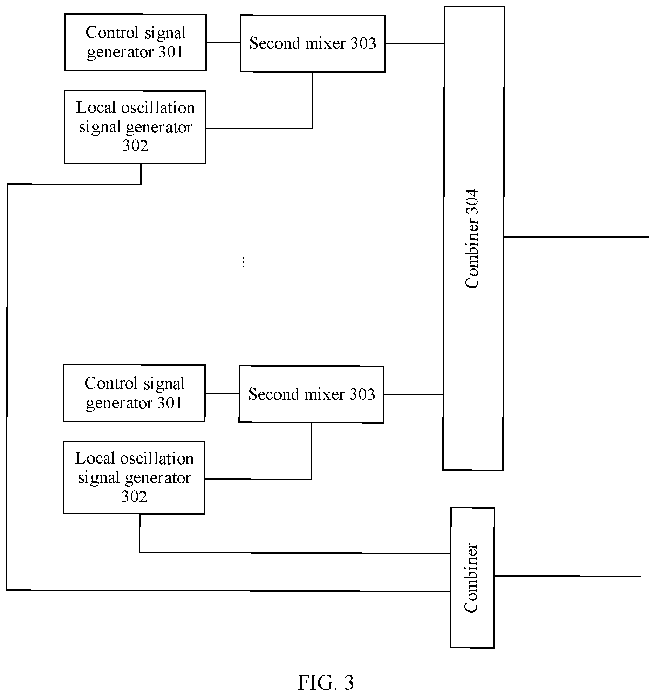

This application provides a quantum bit control signal generation apparatus 300. As shown in FIG. 3, the quantum bit control signal generation apparatus 300 includes a control signal generator 301, a local oscillation signal generator 302, a second mixer 303, and a combiner 304 that are located in a first temperature region, and a quantum chip located in a second temperature region. A temperature of the first temperature region is higher than that of the second temperature region. Generally, the temperature of the first temperature region may be a room temperature, the temperature of the second temperature region may be lower than or about 4K, and a lowest temperature of the first temperature region is also higher than a highest temperature of the second temperature region. It should be understood that the temperature regions described in this application are all at a temperature range. It should be noted that, because a size of a superconducting quantum chip may be smaller in the future, a frequency of a control signal required by the chip to manipulate the signal will be further increased, so that the superconducting quantum chip can operate in a higher temperature environment. Therefore, an operating temperature of the quantum chip may be increased to 100 mK or even higher in the future. The operating temperature of the quantum chip is not limited in embodiments of this application.

The control signal generator 301 and the local oscillation signal generator 302 are separately connected to the second mixer 303. One control signal and one local oscillation signal form one group, there are at least two groups, and sums of frequencies of control signals and local oscillation signals in all groups are different from each other. The second mixer 303 is configured to perform up-conversion on the control signals and the local oscillation signals in all the groups to obtain a plurality of frequency-mixed control signals of different frequencies. The combiner 304 is configured to: receive the frequency-mixed control signals, combine the plurality of frequency-mixed control signals into one channel, and send the one channel of frequency-mixed control signals to the quantum chip 305 through a first transmission medium. The frequency-mixed control signals are used to manipulate a quantum bit in the quantum chip 305.

In this embodiment of this application, a common control signal is loaded to a higher frequency band through up-conversion, and control signals corresponding to different quantum bits are up-converted to different frequency bands, to implement frequency differentiation. Therefore, a frequency division multiplexing technology may be used, to reduce a quantity of signal cables, reduce heat transfer caused by the cables, and alleviate a wiring problem on the quantum chip.

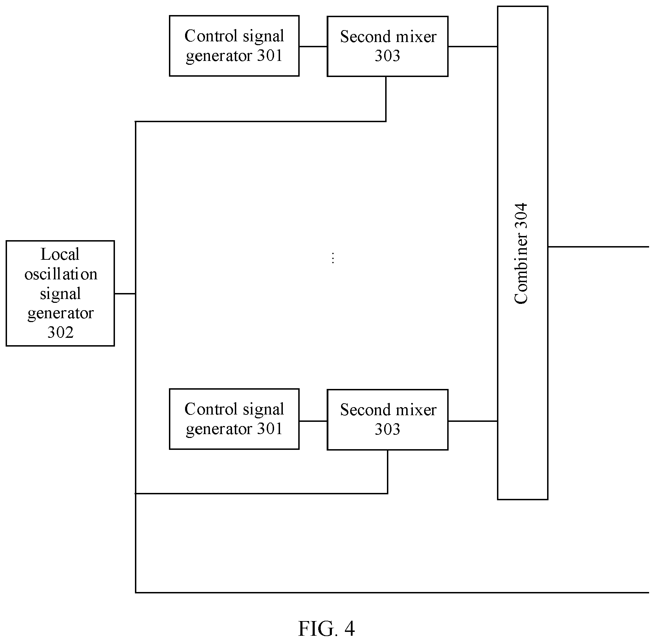

Generally, control signals corresponding to a superconducting bit are in a low frequency band (which generally ranges from 4 GHz to 8 GHz, or ranges from zero to 2 GHz, where a frequency may vary with technological progress), and frequencies are relatively close. To implement frequency differentiation, up-conversion needs to be performed by using the local oscillation signals and the control signals, and different control signals are up-converted to different frequency bands to obtain the frequency-mixed control signals. Generally, the frequency-mixed control signals are generated in the following two manners:
(1) Local oscillation signals of different frequencies are generated, and the frequencies of the local oscillation signals are separated by a sufficient distance. Frequencies of control signals corresponding to different quantum bits may be the same or similar. One local oscillation signal corresponds to one control signal. The local oscillation signals of different frequencies are separately used to perform up-conversion on control signals corresponding to the local oscillation signals of different frequencies. Up-converted control signals do not overlap each other, and are in a completely distinguishable state. In this case, the combiner may combine various channels of up-converted control signals into one channel of signals, and send the one channel of signals out. In addition, the local oscillation signals of different frequencies may also be combined into one channel of signals, and the one channel of signals are sent out. A specific structure may be shown in FIG. 3.
(2) Control signals of different frequencies are generated, and each control signal corresponds to one quantum bit. In this case, one local oscillation signal may be used to perform up-conversion on the control signals of different frequencies, and up-converted control signals are in the completely distinguishable state. In this case, the combiner may combine various channels of up-converted control signals into one channel of signals, and send the one channel of signals out. The local oscillation signal may be directly sent, and a specific structure may be shown in FIG. 4.

It should be noted that there are many manners of generating the frequency-mixed control signals. For example, some local oscillation signals have a same frequency, and the local oscillation signals of the same frequency correspond to the control signals of different frequencies. Three control signals and three local oscillation signals are used as examples. It is assumed that frequencies of local oscillation signals 1 and 2 are the same, namely, f1, and a frequency of a local oscillation signal 3 is f2. A frequency of a control signal 1 is f3, and frequencies of control signals 2 and 3 are both f4. A frequency f1+f3 obtained after the local oscillation signal 1 and the control signal 1 are up-converted, a frequency f1+f4 obtained after the local oscillation signal 2 and the control signal 2 are up-converted, and a frequency f2+f4 obtained after the local oscillation signal 3 and the control signal 3 are up-converted are different from each other, and may be distinguished. The foregoing is merely an example, and a specific manner is not limited in this application.

In addition, considering that the frequency-mixed control signals further need to be down-converted in the second temperature region, a requirement may be met as long as the frequency-mixed control signals of different frequencies can be distinguished, and a frequency difference between a frequency of a corresponding local oscillation signal and a frequency of a frequency-mixed control signal meets an operating frequency of the quantum bit. Therefore, a spacing between frequencies of the local oscillation signal used for up-conversion only needs to be greater than a bandwidth of the control signal. Because a spacing between an image frequency and a signal frequency of one control signal are only a bandwidth of 8 GHz to 16 GHz (for example, if a designed bit frequency is 5 GHz, the bandwidth is 10 GHz), entire spectrum space needs to be divided into a plurality of intervals. One interval includes space of 12 GHz to 24 GHz, and can accommodate about (4 GHz to 8 GHz)/500 MHz = 8 to 16 signal passbands. In a bandwidth of 20 GHz to 70 GHz, about 100 signal passbands can be accommodated.

Further, if local oscillation signals of a plurality of frequencies are used to generate the frequency-mixed control signals, similar to the foregoing manner (1), these local oscillation signals of different frequencies may be combined into one channel, and the one channel of local oscillation signals are sent through a second transmission medium. In this case, the local oscillation signals can share a same combiner with the frequency-mixed control signals (as long as ports are sufficient), or another combiner is used to combine the signals. If one local oscillation signal is used to up-convert the control signals of different frequencies to generate the frequency-mixed control signals, similar to the foregoing manner (2), the local oscillation signal may be transmitted through the second transmission medium alone, or may be transmitted through the first transmission medium together with the frequency-mixed control signals. The first transmission medium may be a coaxial cable or a dielectric waveguide, and the second transmission medium may also be a coaxial cable or a dielectric waveguide. This is not limited in this embodiment.

In addition, at the end of a transmission medium (the first transmission medium and/or the second transmission medium), the signals may enter the quantum chip in three manners. In a first manner, the transmission medium is directly connected to the chip, or connected to the quantum chip through a PCB (or an adapter board of another material). In a second manner, the end of the transmission medium is not directly connected to any object, but is coupled to the quantum chip through near-field coupling. Alternatively, the end of the transmission medium is coupled to a PCB (or an adapter board of another material) through near-field coupling and then connected to the chip. In a third manner, a small-range broadcast is formed at the end of the transmission medium, and the frequency-mixed control signals of different frequencies and the local oscillation signals of different frequencies are broadcast to the quantum chip. Different bits on the quantum chip correspond to different receiving components, configured to receive the control signals of different frequencies.

Another embodiment of this application provides a quantum bit control apparatus, including a first coupling means, a second coupling means, at least one signal extraction means, and a quantum chip that are located in a second temperature region. The first coupling means is configured to: receive a plurality of frequency-mixed control signals from a first transmission medium, and send the frequency-mixed control signals to the signal extraction means. Frequencies of all the frequency-mixed control signals are different. The second coupling means is configured to: receive local oscillation signals from a second transmission medium, and send the local oscillation signals to the signal extraction means. The frequency-mixed control signals and the local oscillation signals are generated in a first temperature region, and a temperature of the first temperature region is higher than that of the second temperature region.

The signal extraction means includes a first filtering and receiving component, a second filtering and receiving component, and a first mixer. The first filtering and receiving component is configured to: filter the received frequency-mixed control signals, and send filtered control signals to the first mixer. The second filtering and receiving component is configured to: filter the received local oscillation signals, and send filtered local oscillation signals to the first mixer. The first mixer is configured to: perform down-conversion on the filtered control signals and the filtered local oscillation signals to restore a control signal, and send the control signal to the quantum chip. The control signal is used to manipulate a quantum bit in the quantum chip.

In this embodiment of this application, the frequency-mixed control signals are transmitted by using a frequency division multiplexing technology, and down-conversion is performed on the frequency-mixed control signals in a low temperature region, so that the obtained control signal conforms to an operating frequency of the corresponding quantum bit, thereby achieving a function of manipulating the quantum bit. According to this method, a quantity of signal transmission cables from a high temperature region to the low temperature region can be reduced, heat transfer caused by the cables can be reduced, and a wiring problem on the quantum chip can also be alleviated.

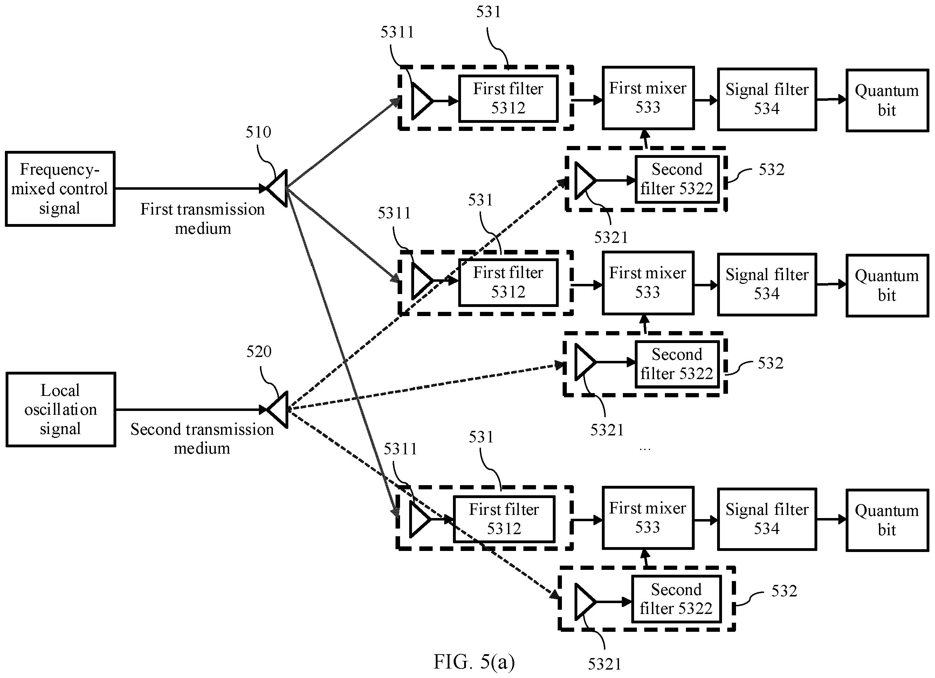

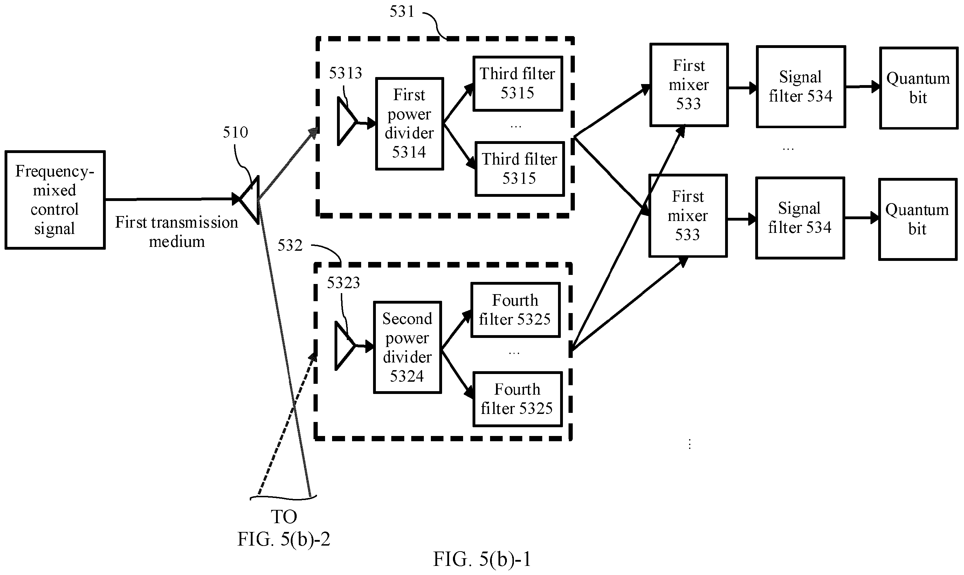

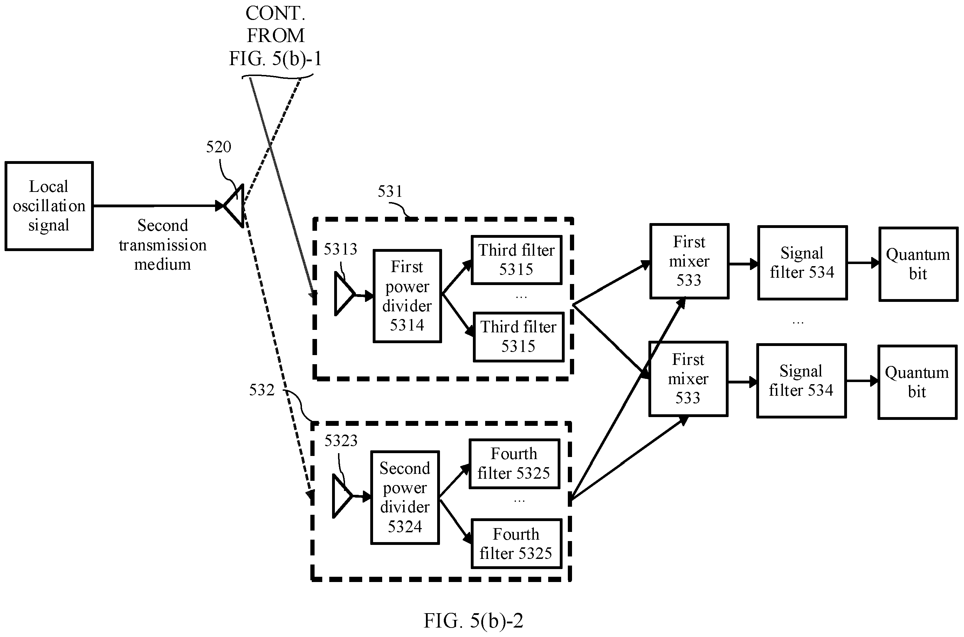

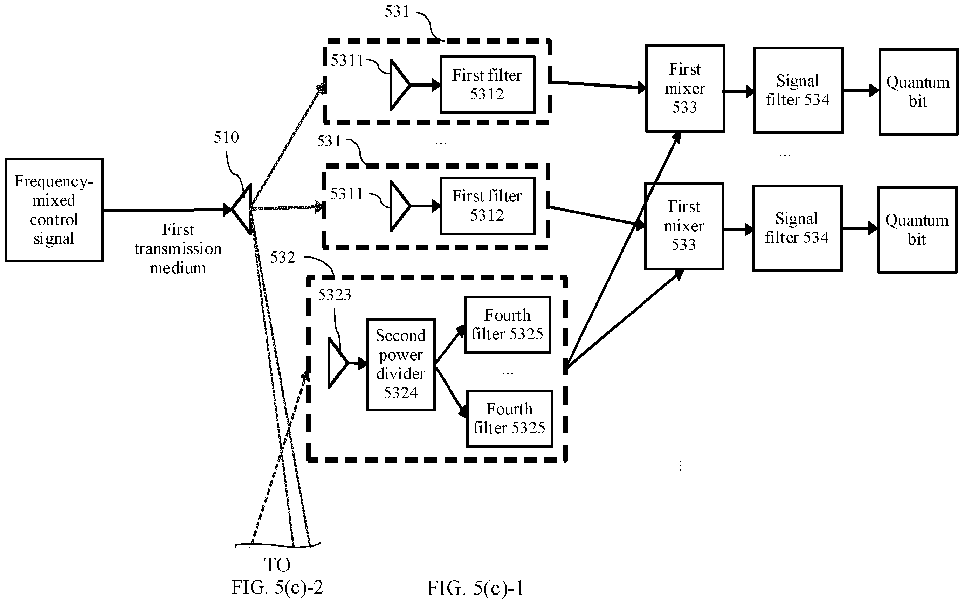

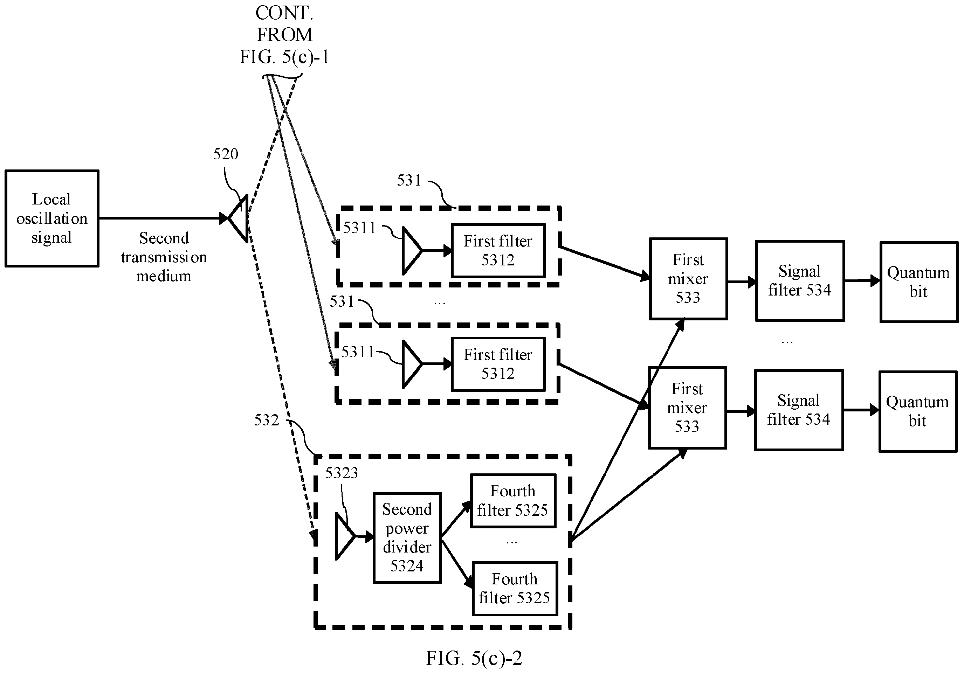

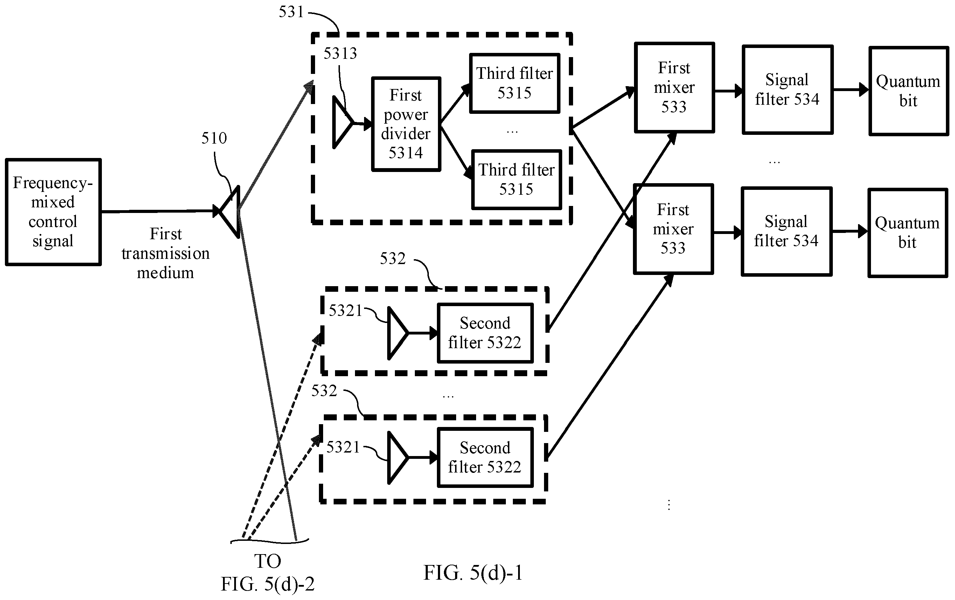

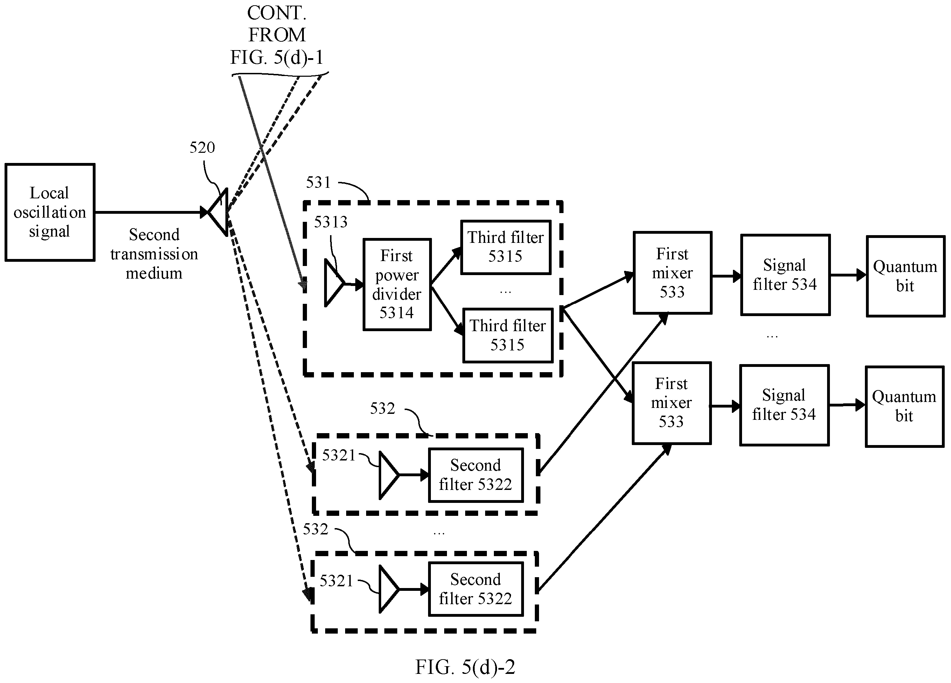

Specifically, the first coupling means may be an antenna or a near-field coupling structure, and the second coupling means may also be an antenna or a near-field coupling structure. Based on this, this application provides a plurality of specific structures to transmit the signals to the quantum chip, as shown in FIG. 5(a) to FIG. 5(d)-2. A quantum bit control apparatus 500 further includes a first transmit antenna 510, a second transmit antenna 520, and at least one signal extraction means 530 that are located in the second temperature region. The first transmit antenna 510 is configured to broadcast the frequency-mixed control signals received from the first transmission medium. The second transmit antenna 520 is configured to broadcast the local oscillation signals received from the second transmission medium. The signal extraction means 530 is configured to: extract the corresponding frequency-mixed control signals and the local oscillation signals, and perform down-conversion, to restore the control signal to manipulate the corresponding quantum bit.

Specifically, the signal extraction means 530 may include: a first filtering and receiving component 531, a second filtering and receiving component 532, and a first mixer 533. The first filtering and receiving component 531 is configured to: filter the received frequency-mixed control signals, and send filtered control signals to the first mixer 533. The second filtering and receiving component 532 is configured to: filter the received local oscillation signals, and send filtered local oscillation signals to the first mixer 533. The first mixer 533 is configured to perform down-conversion on the received filtered control signals and the filtered local oscillation signals, to restore the control signal.

It should be understood that each first mixer corresponds to one quantum bit, and frequencies of the control signals output by the first mixer conform to the operating frequency of the corresponding quantum bit. Therefore, frequencies of the signals that are output to the first mixer by the two filtering and receiving components connected to the first mixer are preset. The filtering and receiving component has a plurality of specific implementations. For example, a horn antenna, a microstrip antenna, or a waveguide slot antenna may be used. Through design, the filtering and receiving component may receive only a frequency-mixed control signal or local oscillation signal of a specific frequency. Alternatively, a receive antenna with a wider spectrum may be selected, and at least one filter is added after the receive antenna. A passband of each filter corresponds to a special frequency and a special bandwidth. Therefore, there are a plurality of possibilities for a specific structure of the filtering and receiving component and a connection relationship between the filtering and receiving component and the first mixer, which are specifically shown as follows:
(1) A connection relationship between the first filtering and receiving component 531 and the first mixer 533 and a connection relationship between the second filtering and receiving component 532 and the first mixer 533 are shown in FIG. 5(a). The first filtering and receiving component 531 includes a first receive antenna 5311 and a first filter 5312. The first receive antenna 5311 is configured to: receive the frequency-mixed control signals, and send the received frequency-mixed control signals to the first filter 5312. The first filter 5312 filters the frequency-mixed control signals, and sends filtered control signals to the first mixer 533.

The second filtering and receiving component 532 includes a second receive antenna 5321 and a second filter 5322. A connection relationship between the second filter 5322 and the first mixer 533 is also shown in FIG. 5(a). The second receive antenna 5321 is configured to: receive the local oscillation signals, and send the local oscillation signals to the second filter. The second filter 5322 filters the local oscillation signals, and sends filtered local oscillation signals to the first mixer 533.

(2) A connection relationship between the first filtering and receiving component 531 and the first mixer 533 and a connection relationship between the second filtering and receiving component 532 and the first mixer 533 are shown in FIG. 5(b)-1 and FIG. 5(b)-2. The first filtering and receiving component 531 includes a third receive antenna 5313, a first power divider 5314, and N third filters 5315. The third receive antenna 5313 is configured to: receive the frequency-mixed control signals, and send the received frequency-mixed control signals to the first power divider 5314. The first power divider 5314 divides the frequency-mixed control signals into N channels, and then respectively sends the N channels of frequency-mixed control signals to the N third filters 5315. The third filter 5315 is configured to: filter one channel of received frequency-mixed control signals, and send filtered control signals to a corresponding first mixer 533. In this case, each third filter 5315 is connected to a different first mixer 533, in other words, the signal extraction means 530 includes N first mixers 533, where N is an integer greater than 1.

The second filtering and receiving component 532 includes a fourth receive antenna 5323, a second power divider 5324, and N fourth filters 5325. The fourth receive antenna 5323 is configured to: receive the local oscillation signals, and send the local oscillation signals to the second power divider 5324. The second power divider 5324 divides the local oscillation signals into N channels, and then respectively sends the N channels of local oscillation signals to the N fourth filters 5325. The fourth filter 5325 is configured to: filter one channel of received local oscillation signals, and send filtered control signals to the corresponding first mixer 533. In this case, each fourth filter 5325 is also connected to a different first mixer 533.

(3) A connection relationship between the first filtering and receiving component 531 and the first mixer 533 and a connection relationship between the second filtering and receiving component 532 and the first mixer 533 are shown in FIG. 5(c)-1 and FIG. 5(c)-2. The first filtering and receiving component 531 includes a first receive antenna 5311 and a first filter 5312. The first receive antenna 5311 is configured to: receive the frequency-mixed control signals, and send the received frequency-mixed control signals to the first filter 5312. The first filter 5312 filters the frequency-mixed control signals, and sends filtered control signals to the corresponding first mixer 533.

The second filtering and receiving component 532 includes a fourth receive antenna 5323, a second power divider 5324, and N fourth filters 5325. The fourth receive antenna 5323 is configured to: receive the local oscillation signals, and send the local oscillation signals to the second power divider 5324. The second power divider 5324 divides the local oscillation signals into N channels, and then respectively sends the N channels of local oscillation signals to the N fourth filters 5325. The fourth filter 5325 is configured to: filter one channel of received local oscillation signals, and send filtered local oscillation signals to a corresponding first mixer 533. In this case, each fourth filter 5325 is connected to a different first mixer 533, and the signal extraction means 530 includes N first filtering and receiving components 531 and N first mixers 533. Each first mixer 533 performs down-conversion on the corresponding filtered control signals and the filtered local oscillation signals, to restore a control signal, where the control signal is used to manipulate the corresponding quantum bit on the quantum chip, where N is an integer greater than 1.

(4) A connection relationship between the first filtering and receiving component 531 and the first mixer 533 and a connection relationship between the second filtering and receiving component 532 and the first mixer 533 are shown in FIG. 5(d)-1 and FIG. 5(d)-2. The first filtering and receiving component 531 includes a third receive antenna 5313, a first power divider 5314, and N third filters 5315. The third receive antenna 5313 is configured to: receive the frequency-mixed control signals, and send the received frequency-mixed control signals to the first power divider 5314. The first power divider 5314 divides the frequency-mixed control signals into N channels, and then respectively sends the N channels of frequency-mixed control signals to the N third filters 5315. The third filter 5315 is configured to: filter one channel of received frequency-mixed control signals, and send filtered control signals to a corresponding first mixer 533. In this case, each third filter 5315 is connected to a different first mixer 533, in other words, the signal extraction means 530 includes N first mixers 533, where N is an integer greater than 1.

The second filtering and receiving component 532 includes a second receive antenna 5321 and a second filter 5322. A connection relationship between the second filter 5322 and the first mixer 533 is also shown in FIG. 5(a). The second receive antenna 5321 is configured to: receive the local oscillation signal, and send the local oscillation signal to the second filter. The second filter 5322 filters the local oscillation signals, and sends filtered local oscillation signals to the first mixer 533. In this case, the signal extraction means 530 further includes N second filtering and receiving components 532, and the N second filtering and receiving components 532 one-to-one correspond to the N first mixers 533.

It should be understood that quantum bits in FIG. 5(a) to FIG. 5(d)-2 are merely examples, and the control signals may be transmitted to the quantum bit to manipulate the quantum bit, and may be transmitted to a control structure, for example, to an adjustable coupling structure through which the quantum bit is manipulated. In addition, one or more control signals are required to manipulate the quantum bit. If a plurality of control signals are required to control the quantum bit, the quantum bit corresponds to a plurality of first mixers. The quantum bit control apparatus in this embodiment is simply modified. Details are not described in this embodiment of this application again.

It should be noted that, if a single local oscillation signal is used during up-conversion, the local oscillation signal broadcast through the second transmit antenna has only one frequency, the second filtering and receiving component 532 in the foregoing manner may not include the second filter 5322, and the local oscillation signal is directly received through the second antenna 5321. However, adding the second filter 5322 may filter out spurious waves or noise signals in other bands, thereby further improving performance. It should be understood that, if the first filtering and receiving component is a designed narrowband receive antenna, a connection relationship between the first filtering and receiving component and the first mixer is also shown in FIG. 5(a), FIG. 5(c)-1 and FIG. 5(c)-2, and the first filtering and receiving component is directly connected to a corresponding first mixer.

In the foregoing several manners, both the third receive antenna 5313 and the fourth receive antenna 5323 perform broad-spectrum reception, the passband of each filter corresponds to the special frequency and the special bandwidth, corresponding control signals and local oscillation signals are selected for down-conversion, to restore a control signal. The control signal is used to manipulate the quantum bit. In this case, a structure of the first filtering and receiving component 531 including the third receive antenna 5313 may further be shown in FIG. 6. An output of the third receive antenna 5313 enters a transmission medium (for example, a waveguide, a microstrip transmission cable, or a coplanar waveguide transmission cable). Filters of different frequency bands are added at different locations of the transmission medium, and the filter may couple signals of a corresponding frequency band from the transmission medium and output a signal to a corresponding first mixer. Similarly, a structure of the second filtering and receiving component 532 including the fourth receive antenna 5323 may also be the structure shown in FIG. 6.

In addition, the connection relationships between the two filtering and receiving components and the first mixer provided in each of the foregoing manners provide a structure of a signal extraction means, as shown in FIG. 5(a) to FIG. 5(d)-2. The quantum bit control apparatus may include a plurality of signal extraction means. The signal extraction means may be similar to that shown in FIG. 5(a), and each signal extraction means processes a pair of control signals and local oscillation signals (a signal extraction means 1 for short). Alternatively, the signal extraction means may be a structure similar to that shown in FIG. 5(b)-1 and FIG. 5(b)-2, and the signal extraction means corresponds to N pairs of control signals and local oscillation signals (a signal extraction means 2 for short). Similarly, the signal extraction means may be the structure in FIG. 5(c)-1 and FIG. 5(c)-2 or FIG. 5(d)-1 and FIG. 5(d)-2 (a signal extraction means 3 or a signal extraction means 4 for short). Alternatively, the signal extraction means may be any combination of the several structures. This is not limited in this application. A quantity of signal extraction means depends on a quantity of quantum bits. For example, there are 100 quantum bits, and N is 10. The quantum bit control apparatus may include 100 signal extraction means 1, 10 signal extraction means 2, 10 signal extraction means 3, or 10 signal extraction means 4. Alternatively, the quantum bit control apparatus may include 10 signal extraction means 1, two signal extraction means 2, three signal extraction means 3, and four signal extraction means 4. To sum up, as long as a total of 100 control signals can be generated to respectively control the 100 quantum bits. If one quantum bit requires two control signals, the quantum bit control apparatus may include 200 signal extraction means 1, 20 signal extraction means 2, 20 signal extraction means 3, or 20 signal extraction means 4. Alternatively, the quantum bit control apparatus may include 20 signal extraction means 1, four signal extraction means 2, six signal extraction means 3, and eight signal extraction means 4. This is not limited in this application.

Optionally, a signal filter 534 further exists between the first mixer and the corresponding quantum bit, and the signal filter 534 one-to-one corresponds to the first mixer 533. Signals output by the first mixer 533 first pass through the signal filter 534, and high-frequency parts of the output signals are filtered out, to restore the control signal to manipulate the corresponding quantum bit.

In addition, because the first mixer outputs a frequency multiplied signal and a difference frequency signal at the same time. The frequency multiplied signal may be passed into an impedance for absorption, and become heat. The frequency multiplied signal may alternatively be output from the chip, passed into an impedance for absorption in the high temperature region, and become heat. Alternatively, the frequency multiplied signal is radiated in an appropriate place, and absorbed by a shielding system. There are a plurality of manners for separating the frequency multiplied signal from the difference frequency signal, for example, filtering in different frequency bands, or a manner in which a plurality of mixers are used to combine local oscillator phase shift and 3 dB coupling. This is not limited in this application.

In addition, a layout relationship between the signal extraction means and the quantum chip is mainly divided into two types. For a first type, the signal extraction means and a superconducting bit are on a same chip, which is briefly referred to as monolithic integration. For a second type, the signal extraction means and the superconducting bit are not on the same chip, which is briefly referred to as multi-chip packaging. Main differences between the two types are two points: difficulty in wiring and impact of high-frequency signals.

In terms of difficulty in wiring, if a monolithic integration manner is adopted, wiring crossover exists. The core of the wiring crossover is that superconducting bits are arranged in two dimensions for a long time, and a coupling structure between the bits divides a chip plane into independent regions. Thus, an air-bridge technology needs to be used for a control signal cable of a superconducting bit in the middle, to reach vicinity of the superconducting bit from an edge. In the method of this embodiment, because signal transmission is spatial, the signal extraction means (the filtering and receiving component, the first mixer, the signal filter, and the like) only needs to be made in a region near the bit, so that the wiring problem can be avoided. A layout structure of the monolithic integration is shown in FIG. 7. Therefore, both monolithic integration and multi-chip packaging can be implemented in this embodiment.

In terms of impact of the high-frequency signals, a frequency division multiplexing transmission manner is used, and the first transmission medium transmits the plurality of frequency-mixed control signals of different frequencies, in other words, a plurality of subbands need to be accommodated. Therefore, a signal of a very high frequency may exist, which may bring negative impact to a superconducting quantum chip and the superconducting quantum bit. Considering this impact, a multi-chip packaging manner may be better, because an isolation layer or a shielding structure may be made on an upper-layer chip to reduce impact of a radiation signal on the superconducting chip, as shown in FIG. 8. Further, more-chip packaging may be used, and a layer closest to the superconducting quantum bit is used as a shield layer, as shown in FIG. 9.

Another method for reducing impact of a plurality of subcarriers on the superconducting bit is to receive multi-subcarrier signals in different regions, and then connect the multi-subcarrier signals to specific locations in a signal routing manner.

In addition, limited by difficulty and costs of an upper-end device that are caused when up-conversion accommodates more subcarriers, there is an upper limit on a quantity of subcarriers (quantity of signals of different frequencies) that can be transmitted through a cable. However, in principle, a quantity of bits on the quantum chip is continuously expanded with technological progress. Therefore, a multi-region division coverage method may be used. Broadcast signals transmitted by each transmit antenna cover different regions of the quantum chip, and shielding measures may be taken between regions to avoid signal crosstalk.

Optionally, the first mixer may be an SIS mixer, an HEB mixer, or another mixer that can operate at a low temperature.

Another embodiment of this application further provides a quantum bit control apparatus. A structure of the quantum bit control apparatus differs from that in the foregoing embodiment in that space radiation is changed into near-field coupling or referred to as small-region radiation coupling. Correspondingly, a wiring structure and the like may be changed. Details are shown in FIG. 10. A quantum bit control apparatus 1000 further includes a first near-field coupling structure 1010, a second near-field coupling structure 1020, and a signal extraction means 1030 that are located in a second temperature region. The first near-field coupling structure 1010 is configured to couple frequency-mixed control signals received from a first transmission medium to the signal extraction means 1030. The second near-field coupling structure 1020 is configured to couple local oscillation signals received from a second transmission medium to the signal extraction means 1030. When the control signals and the local oscillation signals are received in a near-field coupling manner, the near-field coupling structures need to be designed on a chip. The near-field coupling structure may be a directly designed dielectric waveguide-metal waveguide transition structure, or may be a coplanar waveguide probe designed on the chip. Coupling energy on the probe is the strongest at a 1/4 wavelength, to implement conversion between a dielectric waveguide and a coplanar waveguide. In addition, a lens structure may further be designed at an end face of the dielectric waveguide to increase coupling efficiency.

The signal extraction means 1030 includes: a first filtering and receiving component 1031, a second filtering and receiving component 1032, and M first mixers 1033, as shown in FIG. 11. The first filtering and receiving component 1031 is configured to: filter the received frequency-mixed control signals, and respectively send M filtered control signals to the corresponding first mixers 1033. Frequencies of all the filtered control signals are different, and M is an integer greater than 1. The second filtering and receiving component 1032 is configured to: filter the received local oscillation signals, and send M filtered local oscillation signals to the corresponding first mixers 1033. The first mixers 1033 perform down-conversion on the received filtered control signals and the received filtered local oscillation signals, to restore a control signal.

Further, the first filtering and receiving component 1031 includes a third power divider 10311 and M fifth filters 10312. The third power divider 10311 is configured to: divide the frequency-mixed control signals into M channels, and respectively send the M channels of frequency-mixed control signals to the M fifth filters 10312. The fifth filter 10312 is configured to: filter one channel of received frequency-mixed control signals, and send filtered control signals to a corresponding first mixer 1033. The second filtering and receiving component 1032 includes a fourth power divider 10321 and M sixth filters 10322. The fourth power divider 10321 is configured to: divide the local oscillation signals into M channels, and respectively send the M channels of local oscillation signals to the M sixth filters 10322. The sixth filter 10322 is configured to: filter one channel of received local oscillation signals, and send filtered local oscillation signals to the corresponding first mixer. In this embodiment, each fifth filter is connected to a different first mixer, and each sixth filter is connected to a different first mixer.

In addition, a structure of the first filtering and receiving component 1031 may also be the structure shown in FIG. 6. An output of the first near-field coupling structure 1010 enters a transmission medium (for example, a waveguide, a microstrip transmission cable, or a coplanar waveguide transmission cable). Filters of different frequency bands are added at different locations of the transmission medium, and the filter may couple signals of a corresponding frequency band from the transmission medium and output the signal to a corresponding first mixer. Similarly, a structure of the second filtering and receiving component 1032 may also be the structure shown in FIG. 6.

Optionally, a signal filter 1034 further exists between the first mixer 1033 and a corresponding quantum bit, and the signal filter 1034 one-to-one corresponds to the first mixer 1033. Signals output by the first mixer 1033 first pass through the signal filter 1034, and high-frequency parts of the output signals are filtered out, to restore a control signal to manipulate the corresponding quantum bit.

This embodiment is the same as the foregoing embodiment in terms of generation and transmission of the frequency-mixed control signals of different frequencies, and is also the same as the foregoing embodiment in terms of the filter and the first mixer. A difference from the foregoing embodiment lies in a manner in which the signals are coupled to the chip. This embodiment proposes a manner of near-field coupling or small-region radiation coupling. In this manner, the signals do not need to cover a large area of the chip and a plurality of receiving components on the chip, and need to be coupled to only one receiving component on the chip (in a case of regional coupling, there may be a plurality of receiving components). Losses of signal power can be avoided, and irradiation impact of the radiation signals on the chip can be minimized. In addition, a shielding structure may be added around the near-field coupling or small-region radiation coupling structure to further reduce impact on other regions of the chip.

In this embodiment, because the signal is first coupled to a point on the chip, a problem of wiring from the point to vicinity of each quantum bit needs to be considered. If the signal extraction means or the signal filter, and the quantum bits are placed at a same chip, cable-crossing occurs. If the signal extraction means or the signal filter, and the quantum bits are separated, in other words, the quantum bits are placed at a same layer, and the other structures are placed at another layer. The control signal output by the first mixer is connected to vicinity of a superconducting bit through interlayer coupling (for example, connected to a layer at which the quantum bits are located through a micro-bump (bump) and a via). In this case, cable-crossing can be avoided. For a case of layering, refer to a wiring manner shown in FIG. 12. If a signal is coupled to a substrate, the signal is first introduced from the substrate to the chip. For wiring after the signal is introduced to the chip, still refer to FIG. 12.

If areas of structural components such as the filter and the mixer cannot be reduced, so that the structural component can be placed near the quantum bit, or these structures are at a specific distance from the quantum chip due to other considerations, a more general wiring case may be considered. As shown in FIG. 13, one transmission cable corresponds to one mixer chip. Frequency-mixed control signals are allocated to mixer chips, and K control signals are obtained by performing down-conversion on the frequency-mixed control signals. Then, these control signals are independently routed to quantum bits corresponding to a superconducting quantum chip. This connection manner has high feasibility. It should be understood that the mixer chip is merely a name, may include all or some components of the signal extraction means in this application, may be a functional component formed by these components, and is not necessarily limited to one chip. In addition, if a structure that is responsible for coupling a signal to the chip is not integrated on the quantum chip, a cable connector (for example, an SMA or an SMP) may alternatively be used to replace the near-field coupling structure, to ensure alignment of the frequency-mixed control signals and/or the local oscillation signals, and improve signal transmission quality.

It should be noted that, regardless of whether the signals are transmitted in a space radiation or near-field coupling manner, it is not required that the control signals and the local oscillation signals need to be transmitted in a same manner. Alternatively, the control signals may be broadcast through an antenna, and the local oscillation signals may be transmitted by using the near-field coupling structure, or vice versa. For a structure of broadcasting the signals through the antenna, refer to FIG. 5(a) to FIG. 5(d)-2, and for a structure of transmitting the signals by using the near-field coupling structure, refer to a structure in FIG. 10. In addition, if coverage is divided into regions, a signal transmission manner used in each region is independent. For example, a control signal covering a specific region is broadcast through an antenna, and a local oscillation signal is transmitted by using a near-field coupling structure. For another region, both a control signal and a local oscillation signal may be broadcast through an antenna. This is not limited in this application.

In another embodiment of this application, a local oscillation signal used for down-conversion may be generated in a second temperature region, in other words, the local oscillation signal does not need to be transmitted from a first temperature region to the second temperature region through a transmission medium. In this case, a structure of a quantum bit control apparatus is similar to that described in the foregoing embodiment. A difference lies in that the apparatus that receives the local oscillation signal is replaced with an oscillator that directly generates the local oscillation signal. For example, the second transmit antenna and the second filtering and receiving component in FIG. 5(a) to FIG. 5(d)-2 are replaced with the oscillator. Alternatively, the second near-field coupling structure and the second filtering and receiving component in FIG. 10 are replaced with the oscillator. An example in which a control signal is transmitted through a transmit antenna and a receive antenna is used. The structure of the quantum bit control apparatus may be shown in FIG. 14. The quantum bit control apparatus further includes a first transmit antenna 1410 and at least one signal extraction means 1420 that are located in the second temperature region. The first transmit antenna 1410 is configured to broadcast frequency-mixed control signals received from a first transmission medium. The signal extraction means 1420 may further include a first filtering and receiving component 1421, an oscillator 1422, and a first mixer 1423. The first filtering and receiving component 1421 is configured to: filter the received frequency-mixed control signals, and send filtered control signals to the first mixer 1423. The oscillator 1422 is configured to generate a local oscillation signal corresponding to the filtered control signals, and send the local oscillation signal to the first mixer 1423. The first mixer 1423 performs down-conversion on the two signals, to restore a control signal, so as to manipulate a quantum bit.

Specifically, the oscillator located in the second temperature region may be a superconducting tunnel junction SIS source, and a frequency of the SIS source is adjusted by using a direct current signal to generate local oscillation signals of different frequencies. Because a tuning step of the SIS source is large (at a level of dozens of MHz), and quantum computing needs to tune a manipulation signal in a small step, a carrier frequency of the manipulation signal needs to be finely adjusted at a normal temperature side to implement KHz-level manipulation. Generally, a direct current source is used to control a step of the oscillator.

Another embodiment of this application further provides a quantum bit control apparatus. Each control signal independently uses a dielectric waveguide to reduce crosstalk, and is coupled to a quantum chip in a near-field coupling manner. A local oscillation signal is a single-frequency signal, and is radiated to the quantum chip through an antenna. A structure of the quantum bit control apparatus is shown in FIG. 15. The quantum bit control apparatus includes n control signal generators 1501, a local oscillation signal generator 1502, n near-field coupling structures 1503, n first mixers 1504, a transmit antenna 1505, n receive antennas 1506, and the quantum chip, where n is an integer greater than 1. The control signal generators 1501 and the local oscillation signal generator 1502 are located in a first temperature region, and other periods are located in a second temperature region. A temperature of the first temperature region is higher than that of the second temperature region.

Each control signal generator 1501 generates a high-frequency control signal, transmits the high-frequency control signal to the second temperature region through one first transmission medium, and is coupled to a first mixer 1504 by using a corresponding near-field coupling structure 1503. The n control signal generators 1501, the n near-field coupling structures 1503, the n first mixers 1504, and the n receive antennas 1506 are in a one-to-one correspondence. The local oscillation signal generator 1502 generates a single-frequency local oscillation signal, and transmits the single-frequency local oscillation signal to the second temperature region through a second transmission medium. The local oscillation signal is broadcast through the transmit antenna 1505. The n receive antennas 1506 each receive the broadcast local oscillation signal, and send the received local oscillation signal to a corresponding first mixer 1504. The first mixer 1504 performs down-conversion on the received control signals and the received local oscillation signals, to obtain a control signal that conforms to an operating frequency of a quantum bit on the quantum chip, so as to manipulate the quantum bit.

Optionally, a signal filter 1507 further exists between the first mixer 1504 and the quantum chip, and the signal filter 1507 one-to-one corresponds to the first mixer 1504. Signals output by the first mixer 1504 first pass through the signal filter 1507, and high-frequency parts of the output signals are filtered out, so as to better restore a control signal to manipulate a corresponding quantum bit. In addition, a part of the quantum bit control apparatus located in the second temperature region may be in a vacuum state, to prevent heat transfer and other signals from interfering with manipulation of the quantum bit.

It should be noted that, because an operating frequency of a superconducting quantum bit is related to a preparation process. To be specific, an operating frequency of a bit prepared each time may be different from a predetermined value, and therefore a filtering bandwidth of the signal filter, a filtering and receiving component, and the like that are located in the second temperature region has a specific floating requirement. In addition, filtering bandwidths of components such as a filtering and receiving component and a subsequent signal filter corresponding to a plurality of control signals of different frequencies may also be wider than an ideal value, so as to facilitate adaptation to a specific error.

Another embodiment of this application further provides a quantum bit control method, and the quantum bit control method is applied to the quantum bit control apparatus disclosed in this application. A procedure is shown in FIG. 16, and the method includes the following steps.

1601: Receive a plurality of frequency-mixed control signals from a first transmission medium in a second temperature region.

1602: Receive local oscillation signals from a second transmission medium in the second temperature region, where the frequency-mixed control signals and the local oscillation signals are generated in a first temperature region, and a temperature of the first temperature region is higher than that of the second temperature region.

1603: Filter the frequency-mixed control signals.

1604: Filter the local oscillation signals.

1605: Perform down-conversion on filtered control signals and filtered local oscillation signals to restore a control signal, where the control signal is used to manipulate a quantum bit in a quantum chip, there are a plurality of filtered control signals and a plurality of filtered local oscillation signals, and the plurality of filtered control signals one-to-one correspond to the plurality of filtered local oscillation signals.

In this embodiment of this application, the frequency-mixed control signals are transmitted by using a frequency division multiplexing technology, and down-conversion is performed on the frequency-mixed control signals in a low temperature region, so that the obtained control signal conforms to an operating frequency of the corresponding quantum bit, thereby achieving a function of manipulating the quantum bit. According to this method, a quantity of signal transmission cables from a high temperature region to the low temperature region can be reduced, heat transfer caused by the cables can be reduced, and a wiring problem on the quantum chip can also be alleviated.

Optionally, after the receiving a plurality of frequency-mixed signals from a first transmission medium, the method further includes: dividing the frequency-mixed control signals into N channels, and separately filtering the N channels of frequency-mixed control signals, where N is an integer greater than 1.

Optionally, after the receiving local oscillation signals from a second transmission medium, the method further includes: dividing the local oscillation signals into N channels, and separately filtering the N channels of local oscillation signals, where N is an integer greater than 1.

Optionally, frequencies of the control signals in groups are different, and/or frequencies of the local oscillation signals in the groups are different. If a plurality of local oscillation signals of different frequencies are used for mixing with the control signals, the plurality of local oscillation signals of different frequencies may be combined into one channel, and the one channel of local oscillation signals are sent through the second transmission medium. A specific manner of generating the frequency-mixed control signals has been described in detail in the apparatus embodiment, and details are not described again in this application.

Optionally, the first transmission medium may be a coaxial cable or a dielectric waveguide, and the second transmission medium may also be a coaxial cable or a dielectric waveguide.

Further, the local oscillation signals may be generated in the second temperature region. In this case, there is no need to transfer the local oscillation signals. Optionally, after down-conversion is performed on the filtered control signals and the filtered local oscillation signals, down-converted signals may be further first filtered, and then high-frequency parts of signals are filtered out, so as to better restore the control signal to manipulate the corresponding quantum bit.

In addition, if a designed horn antenna, microstrip antenna, or waveguide slot antenna is used, only a frequency-mixed control signal or local oscillation signal of a specific frequency can be received. This is equivalent to that the antenna provides a filtering function. If a receive antenna with a wider spectrum is used, filtering is performed after receiving. If a receive bandwidth of the used receive antenna may include frequencies of the plurality of frequency-mixed signals (or local oscillation signals), the received frequency-mixed control signals may be divided into a plurality of channels, and each channel of frequency-mixed control signals is filtered. For example, if the receive antenna includes frequencies of N frequency-mixed control signals, the N frequency-mixed control signals may be received, and these signals may be separately filtered out through a corresponding filter, where N is an integer greater than 1. A specific implementation has been described in detail in the apparatus embodiment, and details are not described in this embodiment of this application.

In addition, the control signals and/or the local oscillation signals may be transmitted in a broadcast manner or near-field coupling manner. For example, the frequency-mixed control signals and the local oscillation signals are received by using a near-field coupling structure. The received frequency-mixed control signals are divided into M channels, and the M channels of frequency-mixed control signals are separately filtered. The received local oscillation signals are also divided into M channels, and the M channels of local oscillation signals are separately filtered, where M is an integer greater than 1. Then, down-conversion is performed on the filtered control signals and the filtered local oscillation signals to restore the control signal. The M channels of filtered frequency-mixed control signals one-to-one correspond to the M channels of filtered local oscillation signals.

Further, this application further provides a frequency-mixed control signal generation method. A procedure is shown in FIG. 17, and includes the following steps.

1701: Generate control signals and local oscillation signals in a first temperature region, where one control signal and one local oscillation signal form one group, there are at least two groups, and sums of frequencies of the control signals and the local oscillation signals in all groups are different from each other.

1702: Perform up-conversion on the control signals and the local oscillation signals in all the groups to obtain a plurality of frequency-mixed control signals of different frequencies.

1703: Combine the plurality of frequency-mixed control signals into one channel, and send the one channel of the frequency-mixed control signals to a quantum chip located in a second temperature region through a first transmission medium, where the frequency-mixed control signals are used to manipulate a quantum bit in the quantum chip, and a temperature of the first temperature region is higher than that of the second temperature region.

Optionally, frequencies of the control signals in the groups are different, and/or frequencies of the local oscillation signals in the groups are different.

It should be understood that "one embodiment" or "an embodiment" mentioned throughout this specification means that particular features, structures, or characteristics related to the embodiment are included in at least one embodiment of the present invention. Therefore, "in one embodiment" or "in an embodiment" appearing throughout the specification does not necessarily refer to a same embodiment. In addition, these particular features, structures, or characteristics may be combined in one or more embodiments in any appropriate manner. Sequence numbers of the foregoing processes do not mean execution sequences in embodiments of the present invention. The execution sequences of the processes should be determined based on functions and internal logic of the processes, and should not be construed as any limitation to the implementation processes of embodiments of the present invention.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical form or another form.

In summary, what is described above is merely example embodiments of the technical solutions of the present invention, but is not intended to limit the protection scope of the present invention. Any modification, equivalent replacement, or improvement made without departing from the spirit and principle of the present invention shall fall within the protection scope of the present invention.

## Claims

1. A quantum bit control apparatus, wherein the quantum bit control apparatus comprises a first coupling means, a second coupling means, at least one signal extraction means, and a quantum chip that are located in a second temperature region, wherein
the first coupling means is configured to: receive a plurality of frequency-mixed control signals from a first transmission medium, and send the frequency-mixed control signals to the signal extraction means, wherein frequencies of all the frequency-mixed control signals are different;
the second coupling means is configured to: receive local oscillation signals from a second transmission medium, and send the local oscillation signals to the signal extraction means, wherein the frequency-mixed control signals and the local oscillation signals are generated in a first temperature region, and a temperature of the first temperature region is higher than that of the second temperature region; and
the signal extraction means comprises: a first filtering and receiving component, a second filtering and receiving component, and a first mixer, wherein
the first filtering and receiving component is configured to: filter the received frequency-mixed control signals, and send filtered control signals to the first mixer;
the second filtering and receiving component is configured to: filter the received local oscillation signals, and send filtered local oscillation signals to the first mixer; and
the first mixer is configured to: perform down-conversion on the filtered control signals and the filtered local oscillation signals to restore a control signal, and send the control signal to the quantum chip, wherein the control signal is used to manipulate a quantum bit in the quantum chip.

2. The quantum bit control apparatus according to claim 1, wherein the first coupling means is any one of an antenna, a near-field coupling structure, and a cable connector; and the second coupling means is any one of an antenna, a near-field coupling structure, and a cable connector.

3. The quantum bit control apparatus according to claim 1 or 2, wherein the first coupling means is a first antenna, and is configured to broadcast the received frequency-mixed control signals; and the second coupling means is a second antenna, and is configured to broadcast the received local oscillation signals;
the first filtering and receiving component comprises a first receive antenna and a first filter; the first receive antenna is configured to receive the frequency-mixed control signals, and send the frequency-mixed control signals to the first filter; and the first filter is configured to filter the frequency-mixed control signals, and send filtered control signals to the first mixer; and
the second filtering and receiving component comprises a second receive antenna and a second filter; the second receive antenna is configured to receive the local oscillation signals, and send the local oscillation signals to the second filter; and the second filter is configured to filter the local oscillation signals, and send filtered local oscillation signals to the first mixer.

4. The quantum bit control apparatus according to claim 1 or 2, wherein the first coupling means is a first antenna, and is configured to broadcast the received frequency-mixed control signals; the second coupling means is a second antenna, and is configured to broadcast the received local oscillation signals; and the signal extraction means comprises N first mixers, wherein N is an integer greater than 1;
the first filtering and receiving component comprises a third receive antenna, a first power divider, and N third filters, wherein the third receive antenna is configured to receive the frequency-mixed control signals, and send the frequency-mixed control signals to the first power divider; the first power divider is configured to divide the frequency-mixed control signals into N channels, and respectively send the N channels of frequency-mixed control signals to the N third filters; and the third filter is configured to filter one channel of received frequency-mixed control signals, and send filtered control signals to a corresponding first mixer, wherein each third filter is connected to a different first mixer; and
the second filtering and receiving component comprises a fourth receive antenna, a second power divider, and N fourth filters, wherein the fourth receive antenna is configured to receive the local oscillation signals, and send the local oscillation signals to the second power divider; the second power divider is configured to divide the local oscillation signals into N channels, and respectively send the N channels of local oscillation signals to the N fourth filters; and the fourth filter is configured to filter one channel of received local oscillation signals, and send filtered local oscillation signals to the corresponding first mixer, wherein each fourth filter is connected to a different first mixer.

5. The quantum bit control apparatus according to claim 1 or 2, wherein the first coupling means is a first antenna, and is configured to broadcast the received frequency-mixed control signals; the second coupling means is a second antenna, and is configured to broadcast the received local oscillation signals; and the signal extraction means comprises N first filtering and receiving components and N first mixers, wherein N is an integer greater than 1;
the first filtering and receiving component comprises a first receive antenna and a first filter, wherein the first receive antenna is configured to receive the frequency-mixed control signals, and send the frequency-mixed control signals to the first filter; and the first filter is configured to filter the frequency-mixed control signals, and send filtered control signals to a corresponding first mixer; and
the second filtering and receiving component comprises a fourth receive antenna, a second power divider, and N fourth filters, wherein the fourth receive antenna is configured to receive the local oscillation signals, and send the local oscillation signals to the second power divider; the second power divider is configured to divide the local oscillation signals into N channels, and respectively send the N channels of local oscillation signals to the N fourth filters; and the fourth filter is configured to filter one channel of received local oscillation signals, and send filtered local oscillation signals to the corresponding first mixer, wherein each fourth filter is connected to a different first mixer.

6. The quantum bit control apparatus according to claim 1 or 2, wherein the first coupling means is a first antenna, and is configured to broadcast the received frequency-mixed control signals; the second coupling means is a second antenna, and is configured to broadcast the received local oscillation signals; and the signal extraction means comprises N second filtering and receiving components and N first mixers, wherein N is an integer greater than 1;
the first filtering and receiving component comprises a third receive antenna, a first power divider, and N third filters, wherein the third receive antenna is configured to receive the frequency-mixed control signals, and send the frequency-mixed control signals to the first power divider; the first power divider is configured to divide the frequency-mixed control signals into N channels, and respectively send the N channels of frequency-mixed control signals to the N third filters; and the third filter is configured to filter one channel of received frequency-mixed control signals, and send filtered control signals to a corresponding first mixer, wherein each third filter is connected to a different first mixer; and
the second filtering and receiving component comprises a second receive antenna and a second filter, wherein the second receive antenna is configured to receive the local oscillation signals, and send the local oscillation signals to the second filter; and the second filter is configured to filter the local oscillation signals, and send filtered local oscillation signals to the first mixer.

7. The quantum bit control apparatus according to any one of claims 1 to 6, wherein the first transmission medium is a coaxial cable or a dielectric waveguide, and the second transmission medium is a coaxial cable or a dielectric waveguide.

8. The quantum bit control apparatus according to claim 1 or 2, wherein the first coupling means is a first near-field coupling structure or a first cable connector, and is configured to couple the frequency-mixed control signals received from the first transmission medium to the signal extraction means; and the second coupling means is a second near-field coupling structure or a second cable connector, and is configured to couple the local oscillation signals received from the second transmission medium to the signal extraction means;
the first filtering and receiving component is configured to: divide the received frequency-mixed control signals into M channels, perform filtering on each channel of frequency-mixed control signals, and respectively send M filtered control signals to corresponding first mixers, wherein frequencies of all the filtered control signals are different, and M is an integer greater than 1; and
the second filtering and receiving component is configured to: divide the received local oscillation signals into M channels, perform filtering on each channel of local oscillation signals, and send M filtered local oscillation signals to the corresponding first mixers.

9. The quantum bit control apparatus according to claim 8, wherein the first filtering and receiving component comprises a third power divider and M fifth filters, wherein the third power divider is configured to divide the frequency-mixed control signals into the M channels, and respectively send the M channels of frequency-mixed control signals to the M fifth filters; and the fifth filter is configured to filter one channel of received frequency-mixed control signals, and send filtered control signals to a corresponding first mixer, wherein each fifth filter is connected to a different first mixer; and
the second filtering and receiving component comprises a fourth power divider and M sixth filters, wherein the fourth power divider is configured to divide the local oscillation signals into the M channels, and respectively send the M channels of local oscillation signals to the M sixth filters; and the sixth filter is configured to filter one channel of received local oscillation signals, and send filtered local oscillation signals to the corresponding first mixer, wherein each sixth filter is connected to a different first mixer.

10. The quantum bit control apparatus according to any one of claims 1 to 9, wherein there are a plurality of first coupling means, and signals output by all the first coupling means are used to control quantum bits in different regions of the quantum chip.

11. The quantum bit control apparatus according to any one of claims 1 to 10, wherein the signal extraction means further comprises a signal filter, configured to: receive signals output by the first mixer, and filter out high-frequency parts of the output signals to restore the control signal, wherein the signal filter one-to-one corresponds to the first mixer.

12. The quantum bit control apparatus according to any one of claims 1 to 11, wherein one first mixer corresponds to one quantum bit.

13. The quantum bit control apparatus according to any one of claims 1 to 12, wherein the signal extraction means and the quantum bit are integrated at a same layer of the quantum chip.

14. The quantum bit control apparatus according to any one of claims 1 to 12, wherein the signal extraction means and the quantum bit are integrated at different layers of the quantum chip.

15. The quantum bit control apparatus according to claim 14, wherein a shielding structure or a shield layer exists between a layer at which the signal extraction means is located and a layer at which the quantum bit is located.

16. The quantum bit control apparatus according to any one of claims 1 to 15, wherein the first mixer is a superconducting tunnel junction SIS mixer or a phonon-cooled superconducting HEB mixer.

17. The quantum bit control apparatus according to any one of claims 1 to 16, wherein the quantum bit control apparatus further comprises a control signal generator, a local oscillation signal generator, a second mixer, and a combiner that are located in the first temperature region;
the control signal generator and the local oscillation signal generator are separately connected to the second mixer, wherein one control signal and one local oscillation signal form one group, there are at least two groups, and sums of frequencies of the control signals and the local oscillation signals in all groups are different from each other;
the second mixer is configured to perform up-conversion on the control signals and the local oscillation signals in all the groups, to obtain the plurality of frequency-mixed control signals of different frequencies; and
the combiner is configured to: receive the frequency-mixed control signals, combine the plurality of frequency-mixed control signals into one channel, and send the one channel of frequency-mixed control signals to the second coupling means through the first transmission medium, wherein the frequency-mixed control signals are used to manipulate the quantum bit in the quantum chip.

18. The quantum bit control apparatus according to claim 17, wherein frequencies of the control signals in the groups are different, and/or frequencies of the local oscillation signals in the groups are different.

19. A quantum bit control method, wherein the method comprises:
receiving a plurality of frequency-mixed control signals from a first transmission medium in a second temperature region;
receiving local oscillation signals from a second transmission medium in the second temperature region, wherein the frequency-mixed control signals and the local oscillation signals are generated in a first temperature region, and a temperature of the first temperature region is higher than that of the second temperature region;
filtering the frequency-mixed control signals;
filtering the local oscillation signals; and
performing down-conversion on filtered control signals and filtered local oscillation signals to restore a control signal, wherein the control signal is used to manipulate a quantum bit in a quantum chip, there are a plurality of filtered control signals and a plurality of filtered local oscillation signals, and the plurality of filtered control signals one-to-one correspond to the plurality of filtered local oscillation signals.

20. The quantum bit control method according to claim 19, wherein after the receiving a plurality of frequency-mixed control signals from a first transmission medium, the method further comprises: dividing the frequency-mixed control signals into N channels, and separately filtering the N channels of frequency-mixed control signals, wherein N is an integer greater than 1.

21. The quantum bit control method according to claim 19 or 20, wherein after the receiving local oscillation signals from a second transmission medium, the method further comprises: dividing the local oscillation signals into N channels, and separately filtering the N channels of local oscillation signals, wherein N is an integer greater than 1.

22. The quantum bit control method according to any one of claims 19 to 21, wherein the first transmission medium is a coaxial cable or a dielectric waveguide, and the second transmission medium is a coaxial cable or a dielectric waveguide.

23. The quantum bit control method according to any one of claims 19 to 22, wherein the frequency-mixed control signals are received in a broadcast radiation or near-field coupling manner, and/or the local oscillation signals are received in the broadcast radiation or near-field coupling manner.

24. The quantum bit control method according to any one of claims 19 to 23, wherein after the performing down-conversion on the filtered control signals and the filtered local oscillation signals, the method further comprises:
filtering down-converted signals, and filtering out high-frequency parts of signals, to restore the control signal.

25. The quantum bit control method according to any one of claims 19 to 24, wherein before the receiving the frequency-mixed control signals and the local oscillation signals, the method further comprises:
generating the control signals and the local oscillation signals in the first temperature region, wherein one control signal and one local oscillation signal form one group, there are at least two groups, and sums of frequencies of the control signals and the local oscillation signals in all groups are different from each other;
performing up-conversion on the control signals and the local oscillation signals in all the groups, to obtain the plurality of frequency-mixed control signals of different frequencies; and
combining the plurality of frequency-mixed control signals into one channel, and sending, through the first transmission medium, the one channel of frequency-mixed control signals to the quantum chip located in the second temperature region.

26. The quantum bit control method according to claim 25, wherein frequencies of the control signals in the groups are different, and/or frequencies of the local oscillation signals in the groups are different.
